# EUROPEAN PATENT APPLICATION

(11) **EP 4 621 555 A1**
(43) Date of publication of application: **24.09.2025**
(21) Application number: 25162576.0
(22) Date of filing: 10.03.2025
(51) Int. Cl.: G06F 8/33, G05B 19/05

(54) **INTEGRATED DESIGN ENVIRONMENT IN-LINE GENERATIVE AI CODE EDITOR**

(30) Priority: 20.03.2024 US 202418610444
(71) Applicant: Rockwell Automation Technologies, Inc., Mayfield Heights, OH 44124 (US)
(72) Inventor: Carrara, Anthony, Mayfield Heights, OH, 44124 (US); Ohlsen, Michael J., Mayfield Heights, OH, 44124 (US); Anand, Ashish, Mayfield Heights, OH, 44124 (US); Masarik, Matthew T., Mayfield Heights, OH, 44124 (US); Mathson, Kurt E., Mayfield Heights, OH, 44124 (US); Majewski, Lorenzo, Mayfield Heights, OH, 44124 (US); Fernandes, Fabiano, Mayfield Heights, OH, 44124 (US)
(74) Representative: Grünecker Patent- und Rechtsanwälte PartG mbB

(57) **Abstract**

An integrated development environment (IDE) leverages a generative AI model to generate industrial control code in accordance with specified functional requirements, which can be provided to the industrial IDE system as intuitive natural language spoken or written text. The industrial IDE can also analyze written code in response to natural language prompts submitted against the code, generate answers to user-submitted questions about the code, and offer recommendations for improving the code in response to specific questions or requests submitted by the user.

## Description

### TECHNICAL FIELD

The subject matter disclosed herein relates generally to industrial automation systems, and, for example, to industrial programming development platforms.

### BACKGROUND ART

The various control, monitoring, and analytical devices that make up an industrial environment are typically programmed or configured using respective configuration applications specific to each type of device. For example, industrial controllers are typically configured and programmed using a control programming development application such as a ladder logic editor. Using such development platforms, a designer can write control programming for carrying out a desired industrial sequence or process and download the resulting program files to the controller.

The conventional approach to configuring and programming industrial devices to carry out prescribed manufacturing processes requires not only specialized knowledge of the programming languages and device configuration settings used to configure the devices, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

### BRIEF DESCRIPTION

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a system is provided, comprising a user interface component configured to receive, via an integrated development environment (IDE) interface, a natural language query directed to industrial control code that, in response to execution on an industrial controller, causes the industrial controller to monitor and control an industrial automation system in accordance with the industrial control code; and a generative artificial intelligence (AI) component configured to, in response to receipt of the natural language query, generate a natural language answer to the natural language query based on analysis of the industrial control code, industry knowledge encoded in the one or more custom models, and a response prompted from a generative AI model comprising information used by the generative AI component to formulate the natural language answer, wherein the user interface component is configured to render the natural language answer on the IDE interface.

Also, one or more embodiments provide a method, comprising receiving, by a system comprising a processor via an integrated development environment (IDE) interface, a natural language query directed to industrial control code that, in response to execution on an industrial controller, causes the industrial controller to monitor and control an industrial automation system in accordance with the industrial control code; in response to receipt of the natural language query, generating, by the system, a natural language answer to the natural language query based on analysis of the industrial control code, industry knowledge encoded in the one or more custom models, and a response prompted from a generative AI model, wherein the response comprises information used by the system to formulate the natural language answer; and rendering, by the system, the natural language answer on the IDE interface.

Also, according to one or more embodiments, a non-transitory computer-readable medium is provided having stored thereon instructions that, in response to execution, cause an industrial integrated development environment (IDE) to perform operations, the operations comprising receiving, via an integrated development environment (IDE) interface, a natural language query directed to industrial control code that, in response to execution on an industrial controller, causes the industrial controller to monitor and control an industrial automation system in accordance with the industrial control code; in response to receipt of the natural language query, generating a natural language answer to the natural language query based on analysis of the industrial control code, industry knowledge encoded in the one or more custom models, and a response prompted from a generative AI model, wherein the response comprises information used by the system to formulate the natural language answer; and rendering the natural language answer on the IDE interface.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example integrated development environment (IDE) system.
FIG. 3 is a diagram illustrating example data flows associated with creation of a system project for an automation system being designed using IDE system.
FIG. 4 is a diagram illustrating training of custom models used by a generative AI component of the industrial IDE system.
FIG. 5 is a diagram illustrating commissioning of a system project.
FIG. 6 is an example project development interface that can be rendered by one or more embodiments of the industrial IDE system's user interface component.
FIG. 7 is a view of the project development interface in which a user has begun developing industrial control code via interaction with the workspace canvas.
FIG. 8 is another view of the project development interface in which the user has invoked a generative AI copilot window.
FIG. 9 is a view of the example copilot window in isolation.
FIG. 10 is a diagram illustrating the use of industry-specific prompt engineering in connection with generating control code or other aspects of a system project.
FIG. 11 is a view of the copilot window illustrating use of the generative AI copilot to generate code based on a user's natural language request or query.
FIG. 12 is a view of the copilot window in which a user has submitted a request for specific information about proposed code.
FIG. 13 is another view of a portion of the copilot window in which the window has rendered a natural language response to a request for additional information.
FIG. 14 is a view of the development interface depicting integration of the generated control code into the user's control code.
FIG. 15 is a view of the development interface in which control code is rendered in the workspace canvas in ladder logic format.
FIG. 16 is a representation of an example control project that can be generated by embodiments of the industrial IDE system.
FIG. 17 is a diagram illustrating example data flows associated with creation of a control project using the industrial IDE system.
FIG. 18 is a representation of an example set of smart object definitions for which a set of hierarchical relationships have been defined.
FIG. 19 is a diagram illustrating allocation of smart object instances to selected controller definitions.
FIG. 20 is a segment of the project development interface illustrating an example graphical depiction of bindings between smart object definitions and controller definitions.
FIG. 21 is a diagram illustrating generative AI analysis of control code submitted to the industrial IDE system.
FIG. 22 is a diagram illustrating testing of example control code by the IDE system's project testing component.
FIG. 23 is a diagram illustrating generation of test scripts by the industrial IDE system using generative AI.
FIG. 24a is a flowchart of a first part of an example methodology for using generative AI to assist in creation of industrial control code within an industrial IDE system.
FIG. 24b is a flowchart of a second part of the example methodology for using generative AI to assist in creation of industrial control code within an industrial IDE system.
FIG. 25a is a flowchart of a first part of an example methodology for leveraging generative AI in connection with developing and deploying industrial control applications within a multi-controller project development platform.
FIG. 25b is a flowchart of a second part of the example methodology for leveraging generative AI in connection with developing and deploying industrial control applications within a multi-controller project development platform.
FIG. 26 is a flowchart of an example methodology for generating test scripts designed to validate proper operation of industrial control code.
FIG. 27a is a flowchart of a first part of an example methodology for using a generative AI model to respond to user's natural language prompts submitted against industrial control code.
FIG. 27b is a flowchart of a second part of the example methodology for using a generative AI model to respond to user's natural language prompts submitted against industrial control code.
FIG. 28a is a flowchart of a first part of an example methodology for leveraging generative AI to optimize or otherwise modify control code to improve one or more coding metrics.
FIG. 28b is a flowchart of a second part of the example methodology for leveraging generative AI to optimize or otherwise modify control code to improve one or more coding metrics.
FIG. 29 documenting an industrial control program using generative AI.
FIG. 30 is an example computing environment.
FIG. 31 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

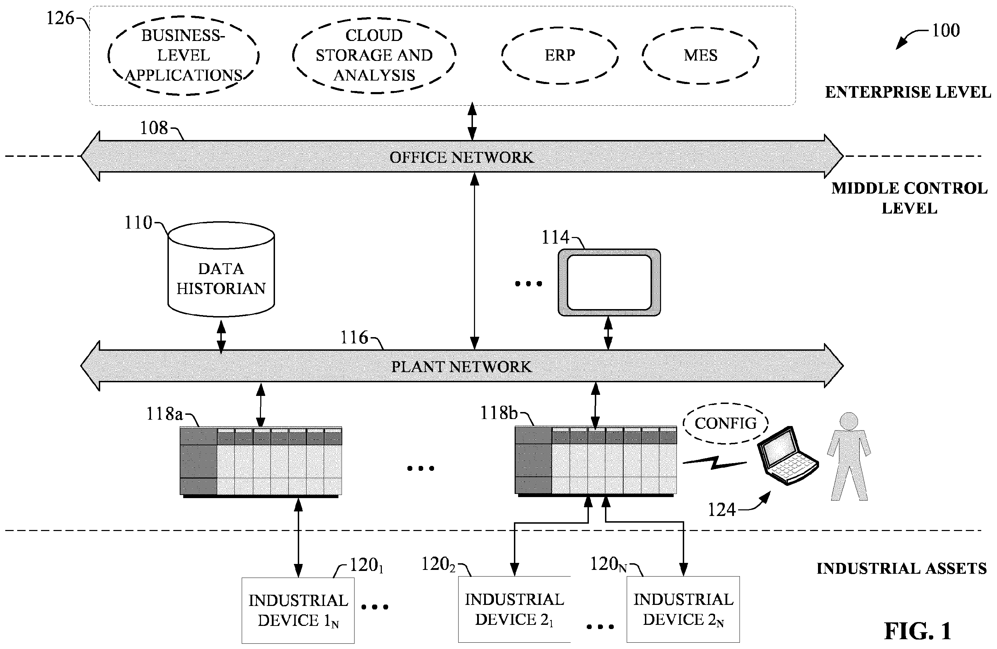

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

The various control, monitoring, and analytical devices that make up an industrial environment are typically programmed or configured using respective configuration applications specific to each type of device. For example, industrial controllers 118 are typically configured and programmed using a control programming development application such as a ladder logic editor (e.g., executing on a client device 124). Using such development platforms, a designer can write control programming (e.g., ladder logic, structured text, function block diagrams, etc.) for carrying out a desired industrial sequence or process and download the resulting program files to the controller 118.

The conventional approach to configuring and programming industrial controllers 118 to carry out prescribed manufacturing processes requires not only specialized knowledge of the programming languages and device configuration settings used to configure the controllers, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

To address at least some of these or other issues, one or more embodiments described herein provide an integrated development environment (IDE) for designing, programming, and configuring aspects of an industrial automation system using generative artificial intelligence (AI) techniques. Embodiments of the industrial IDE can make use of a generative AI model and associated neural networks to generate portions of an industrial automation project - including control code, code commentary, data tags, I/O or device configurations, or other such project elements - in accordance with functional requirements provided to the IDE system as intuitive natural language inputs (e.g., spoken or written natural language text). The IDE system includes a specialized prompt engineering layer and associated custom models - trained using knowledge of various types of industrial control applications, knowledge of specific industrial verticals (e.g., automotive, pharmaceutical, food and drug, oil and gas, mining, textiles, power generation, etc.), vertical-specific industrial standards and best practices, and other such training data - that generates prompts or meta-prompts based on a user's natural language inputs for submission to generative AI models such as large language models (LLMs). The industrial IDE system can also leverage generative AI to analyze pre-written control code in response to natural language prompts submitted against the code, generate answers to user-submitted questions about the code, and offer recommendations for improving the code in response to specific questions or requests submitted by the user.

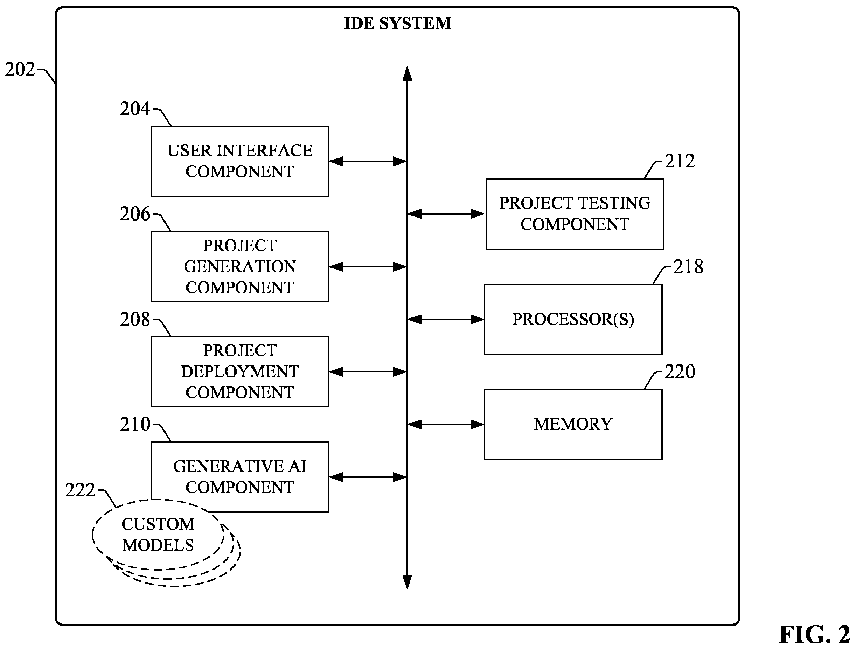

FIG. 2 is a block diagram of an example integrated development environment (IDE) system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

IDE system 202 can include a user interface component 204, a project generation component 206, a project deployment component 208, a generative AI component 210, a project testing component 212, one or more processors 218, and memory 220. In various embodiments, one or more of the user interface component 204, project generation component 206, project deployment component 208, generative AI component 210, project testing component 212, the one or more processors 218, and memory 220 can be electrically and/or communicatively coupled to one another to perform one or more of the functions of the IDE system 202. In some embodiments, components 204, 206, 208, 210, and 212 can comprise software instructions stored on memory 220 and executed by processor(s) 218. IDE system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

User interface component 204 can be configured to receive user input and to render output to the user in any suitable format (e.g., visual, audio, tactile, etc.). In some embodiments, user interface component 204 can be configured to generate and serve interface displays to a client device 304 (e.g., a laptop computer, tablet computer, smart phone, etc.), and exchange data via these interface displays. Input data that can be received via various embodiments of user interface component 204 can include, but is not limited to, natural language chat input or prompts, control programming in a text-based or graphical format, industrial design specifications or goals submitted in various formats (e.g., natural language text or vocal input etc.), or other such input. Output data rendered by various embodiments of user interface component 204 can include natural language responses to chat input or prompts, industrial control code or control code comments, answers to user-submitted questions or requests, programming suggestions, or other such outputs.

Project generation component 206 can be configured to create a system project comprising one or more project files based on design input received via the user interface component 204, assisted by application of generative AI. The project files include at least industrial control code that, when executed on an industrial controller 118, facilitate monitoring and controlling an industrial automation system in accordance with the control routines defined by the control code. Project deployment component 208 can be configured to commission the system project created by the project generation component 206 to appropriate industrial devices (e.g., industrial controllers 118 or another type of industrial device capable of executing the control code, etc.) for execution.

Generative AI component 210 can be configured to assist the project generation component 206 in generating or analyzing portions of the system project - including generating industrial control code and device configuration settings, etc. - using generative AI. To this end, the generative AI component 112 can implement prompt engineering functionality using associated custom models 122 trained with domain-specific industrial training data. The generative AI component 210 can generate and submit prompts or meta-prompts to one or more generative AI models and associated neural networks, where these prompts are generated based on natural language requests or queries submitted by the designer as well as domain-specific information contained in the custom models 222. Depending on the nature of the designer's request or query, the responses returned by the generative AI model in response to the prompts can be used by the project generation component 206 or the user interface component 204 to generate portions of the system project, to render answers to designer's questions about a portion of control code or about the design platform itself, to ascertain or to perform other IDE tasks.

Project testing component 212 can be configured to execute testing scripts that test and validate proper execution of various aspects of a system project (e.g., portions of industrial control code or HMI code). In some embodiments, the test scripts themselves can be generated by the generative AI component 210, which can infer appropriate test cases or scenarios for portions of the system project to be tested and generate appropriate test scripts designed to validate those test cases.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

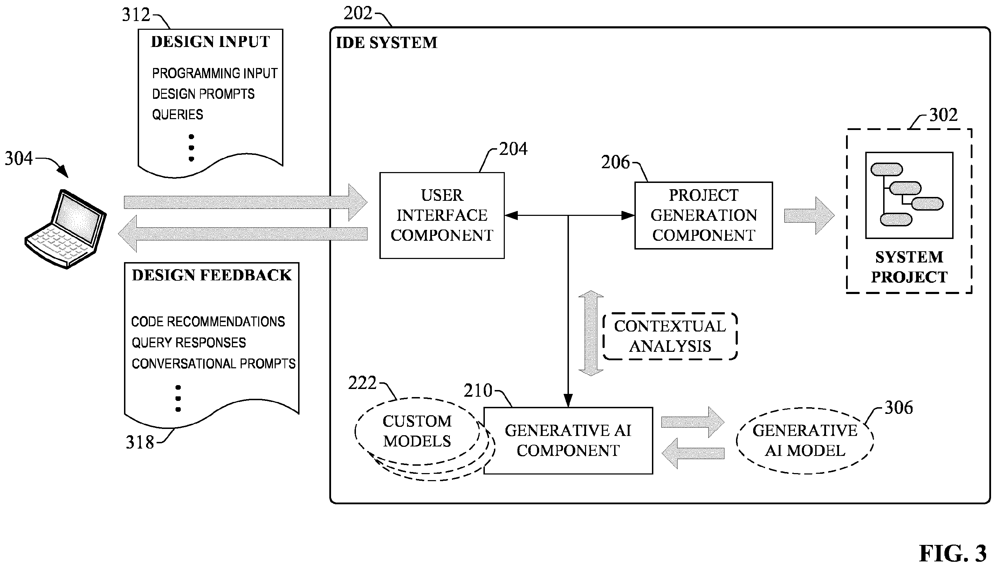

FIG. 3 is a diagram illustrating example data flows associated with creation of a system project 302 for an automation system being designed using IDE system 202 according to one or more embodiments. Some embodiments of the IDE system 202 can be implemented on a cloud platform and made accessible to multiple industrial customers having authorized access to use the IDE system's services. Cloud-based implementations can also facilitate collaborative project development whereby multiple developers contribute design and programming input to a common automation system project. Alternatively, some embodiments of IDE system 202 may execute at least partially on a local client device while accessing remote services and repositories as needed.

A client device 304 (e.g., a laptop computer, tablet computer, desktop computer, mobile device, wearable AR/VR appliance, etc.) owned by a user with suitable authentication credentials can access the IDE system's project development tools and leverage these tools to create a system project 302 - including industrial control code, device configuration settings, or other such aspects of an industrial control project - for an automation system being developed. Through interaction with development interfaces generated by the system's user interface component 204 (examples of which will be described herein), developers can submit design input 312 to the IDE system 202 in various supported formats. Design input 312 can include explicit control programming entered by the user in a text-based or graphical format (e.g., ladder logic, structured text, sequential function charts, a domain-specific language, etc.) as well as device configuration parameter definitions to be downloaded to a corresponding device, such as an industrial controller 118.

Additionally, the IDE system's development services can include a control code generation and analysis copilot that leverages generative AI to assist the user in creating, analyzing, and documenting control code for an industrial application, as well as to search for answers to specific questions relating to the control code or its development. The copilot can include a generative AI component 210 that responds to natural language prompts submitted by the user as part of design input 312. These prompts can comprise, for example, descriptions of functional requirements of the control code being developed, questions about existing control code, requests for programming recommendations, questions regarding programming instructions that are available to solve a specified development problem, or other such prompts. Depending on the nature of the prompt, the generative AI component 210 can generate control code recommendations for consideration by the developer, answers to questions about the control code or about programming tools that are available as part of the IDE system's development platform, or other such content designed to assist the user in developing or learning about control code.

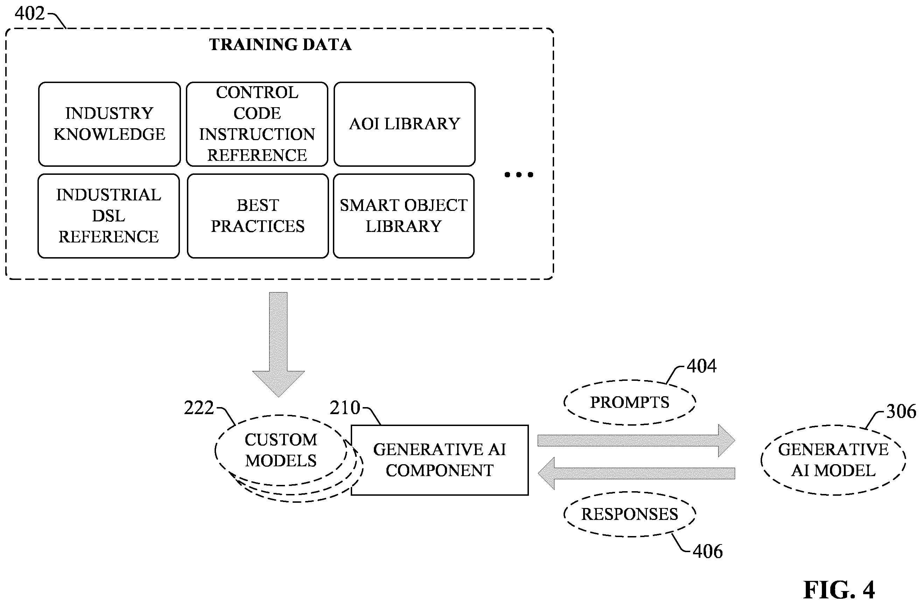

The generative AI component 210 can implement prompt engineering functionality using associated custom models 222 trained with domain-specific industrial training data, and can interface with a generative AI model 306 (e.g., an LLM or another type of model) and associated neural networks. FIG. 4 is a diagram illustrating training of the custom models 222 used by the generative AI component 210. In some embodiments, the generative AI model 306 can reside and execute externally from the IDE system 202, and the generative AI component 210 can include suitable connectivity tools and protocols, application programming interfaces (APIs), or other such services that allow the generative AI component 210 to exchange prompts and responses with the generative AI model 306. Custom models 222 can be trained using sets of training data 402 representing a range of domain-specific industrial knowledge. Example training data 402 that can be used to train the custom models 222 includes, but is not limited to, libraries of control code instructions or add-on instructions (AOIs) that encode control or computational functionality and that can be added as elements to control routines, libraries of control code samples or smart objects that encapsulate reusable control code, libraries of user-defined data types (UDTs), libraries of product manuals for various types of industrial devices or software platforms (including programming or instruction manuals for the IDE system's control code development platform, as well as vendor-specific device manuals), help files, vendor knowledgebases, training materials, information defining industrial standards (e.g., global or vertical-specific safety standards, food and drug standards, design standards such as the ISA-88 standard, etc.), technical specifics or design standards for various types of industrial control applications (e.g., batch control processes, die casting, valve control, agitator control, etc.), knowledge of specific industrial verticals, knowledge of industrial best practices, control design rules, industrial domain-specific language (DSL) syntax data, and other such training data.

During the project development process, the generative AI component 210 formulates and submits prompts 404 to the generative AI model 306 designed to obtain responses 406 that assist with control project development tasks. These prompts 404 are generated based on the user's natural language inputs as well as the industry knowledge and reference data encoded in the trained custom models 222. The generative AI component 210 can reference custom models 222 as needed in connection with processing a user's natural language queries or requests (which may be submitted as design input 312) and prompting the generative AI model 306 for responses 406 that assist the user interface component 204 and project generation component 206 in addressing these queries and requests.

Returning to FIG. 3, based on the user's design input 312, user interface component 204 can render design feedback 318 designed to assist the developer in connection with developing a system project 302. At least some of this design feedback can comprise natural language chat prompts generated by the generative AI component 210 requesting specific items of information from the user (e.g., as part of an iterative dialogue with the user intended to ascertain the user's design requirements), recommendations for control code that satisfies the user's design requirements, responses to questions submitted by the user about control code or the IDE system's programming tools, or other such feedback.

As noted above, the generative AI component 210 can leverage the trained custom models 222 in connection with assisting the user with development of the system project 302. For example, the generative AI component 210 can perform contextual analysis on control code being developed by the user, or that has been submitted to the IDE system 202 for analysis. This contextual analysis can infer, based on the training of the custom models 222 (supplemented, if needed, by responses 406 prompted from the generative AI model 222), a type of industrial application to which the control code is directed (e.g., a type of batch processing, web tension control, conveyor control, a die casting application, valve control, sheet metal stamping, etc.) or an industrial vertical for which the control code is being developed (e.g., food and beverage, pharmaceuticals, automotive, textiles, mining, aerospace, marine, die casting, etc.). Based on this contextual information, the generative AI component 210 can generate recommendations for additional control code (or edits to portions of the control code that has already been developed) that fulfills control functionality known to be required for the type of control application being programmed, or that aligns with prescribed functional, safety, or programming standards defined for the industrial vertical for which the project 302 is being developed. The generative AI component 210 can also use this contextual information to accurately answer questions about the system project 302 and its associated control code submitted by the user as a natural language query.

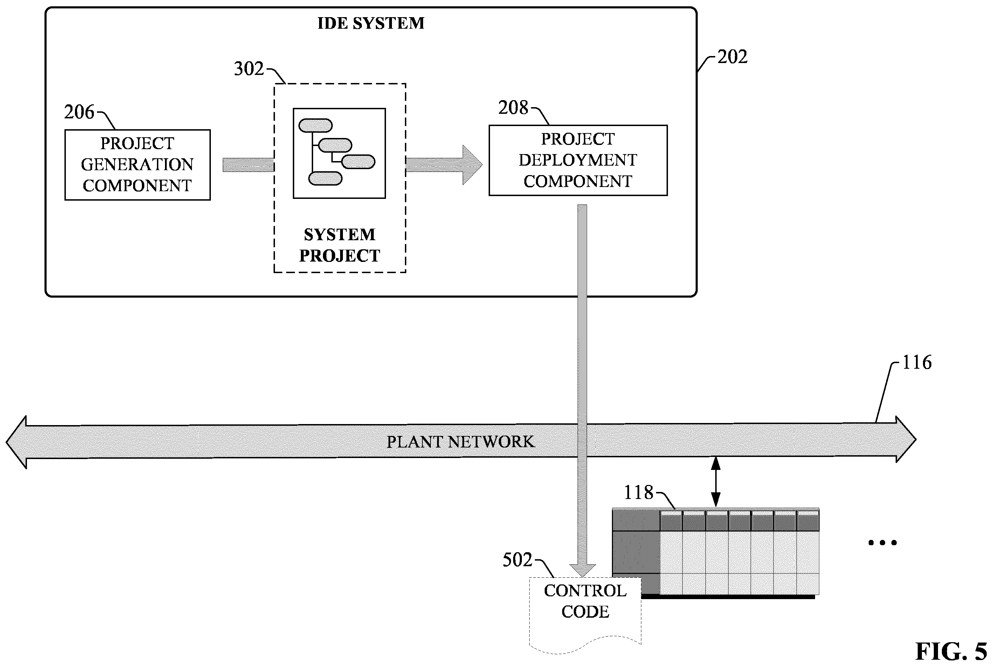

When a fully developed system project 302 for an automation system has been completed, the system project 302 can be deployed to one or more target control devices for execution. FIG. 5 is a diagram illustrating commissioning of a system project 302. Project deployment component 208 can compile or otherwise translate a completed system project 302 into one or more executable files or configuration files that can be stored and executed on respective target industrial devices of the automation system (e.g., industrial controllers 118, or other types of industrial devices such as motor drives, safety relays, etc.).

As noted above, system project 302 may comprise one or more of control code, device parameter definitions or settings, or other such control project elements. Upon completion of project development, a user can identify which target device - e.g., an industrial controller 118 - is to execute or receive the system project 302. Project deployment component 208 can then translate controller code defined by the system project 302 to a control program file 502 formatted for execution on the specified industrial controller 118 and send this control program file 502 to the controller 118 (e.g., via plant network 116) for execution. Execution of the control program file 502 on the controller 118 causes the controller 118 to perform monitoring and control functions for an industrial automation system in accordance with the control code and device configuration settings defined by the system project 302.

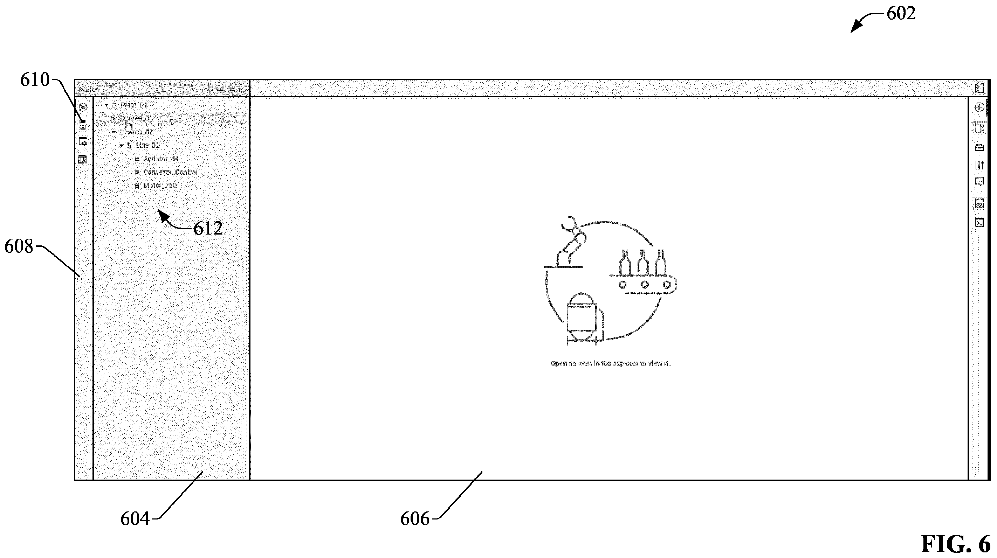

FIG. 6 is an example project development interface 602 that can be rendered by one or more embodiments of the industrial IDE system's user interface component 204. Development interface 602 is organized into panels and workspaces and includes interactive development tools that assist a user in developing control system projects 302, including industrial control code to be executed on one or more industrial controllers. The example project development interface 602 depicted in FIG. 6 comprises a workspace canvas 606 and an explorer panel 604 pinned to the left of the workspace canvas 606. Explorer panel 604 serves as a means for navigating and viewing content of a control project 302. The Explorer panel 604 itself supports different viewing categories, which are represented by selectable explorer icons 610 rendered on an explorer view control bar 608 pinned to the left-side edge of the Explorer panel 604. Selection of an explorer icon 610 determines one or both of the type of project content to be browsed via the Explorer panel 604 or a format in which the browsable project content is rendered on the Explorer panel 604.

The explorer panel 604 displays a system view navigation tree 612 comprising hierarchical nodes representing automation systems that include one or more industrial controllers. The nodes are given user-defined names and are organized in the navigation tree 612 according to a user-defined hierarchical organizational schema to assist the user in locating a desired automation system in the tree 612. The tree 612 can include automation system nodes representing the automation systems (e.g., "Line_02"), which can be classified under one or more other hierarchical location nodes (e.g., city nodes, plant nodes, line nodes, etc.) representing the locations of the automation systems. The user can browse these various nodes to locate a desired automation system.

Selection of one of the automation system nodes of the navigation tree 612 causes content of the control project 302 associated with the corresponding automation system to be rendered in the workspace canvas 606. If content has already been created for the selected automation system - e.g., control programming, data tag definitions, controller definitions, etc. - this content will be displayed for viewing and editing in the workspace canvas 606. If new control programming is to be created for the selected automation system, the user can begin developing control logic and defining industrial controllers for the automation system via interaction with the workspace canvas 606. In some embodiments, the control programming and data tag definitions that are to be installed and executed on the automation system's controllers can be developed in the IDE environment without initially binding the control programming to a specific controller definition, allowing the control code development to be decoupled from its hardware implementation until the user is ready to allocate the control code - e.g., as a smart object instance- to a selected controller 118.

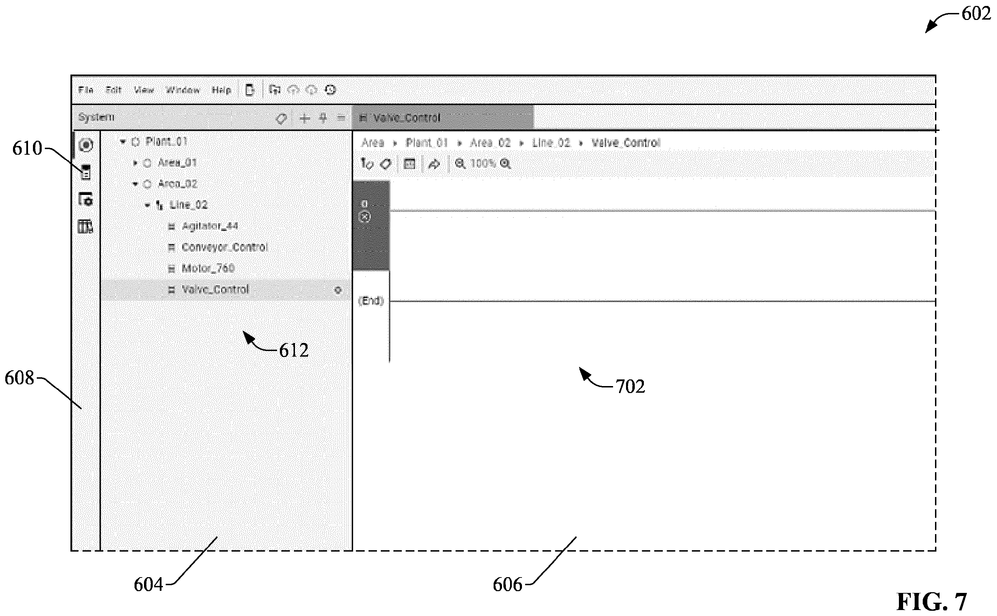

FIG. 7 is a view of the project development interface 602 in which a user has begun developing industrial control code 702 via interaction with the workspace canvas 606. According to an example workflow, the user can create a Routine node as a child of an Automation System node in the navigation tree 612. The Routine node represents a routine of a control program to be executed by a controller 118 to facilitate monitoring and control of the automation system represented by the parent Automation System node. With the Routine node selected, the user can develop control code 702 for the routine via interaction with the workspace canvas 606. The interface 602 can allow the user to selectively view and write the control program in either a text-based format or a graphical format such as ladder logic (FIG. 7 depicts a ladder logic view of a control program in progress).

At any time during the control code development process, the user can prompt the IDE system's generative AI functionality for assistance in developing the control code 702. For example, the generative AI component 210, using its custom models 222 and prompting the generative AI model 306 as needed, can generate code that satisfies design requirements specified by the user's natural language prompts, generate recommendations for modifying existing control code in a manner that addresses issues specified by the user's prompts, provide answers to the user's questions about the control code or about the programming platform itself, or provide other such assistance.

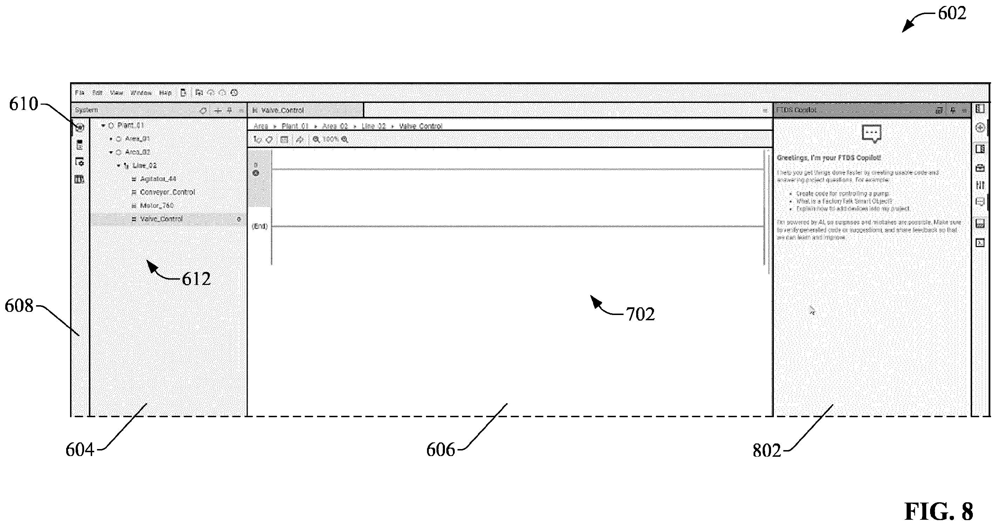

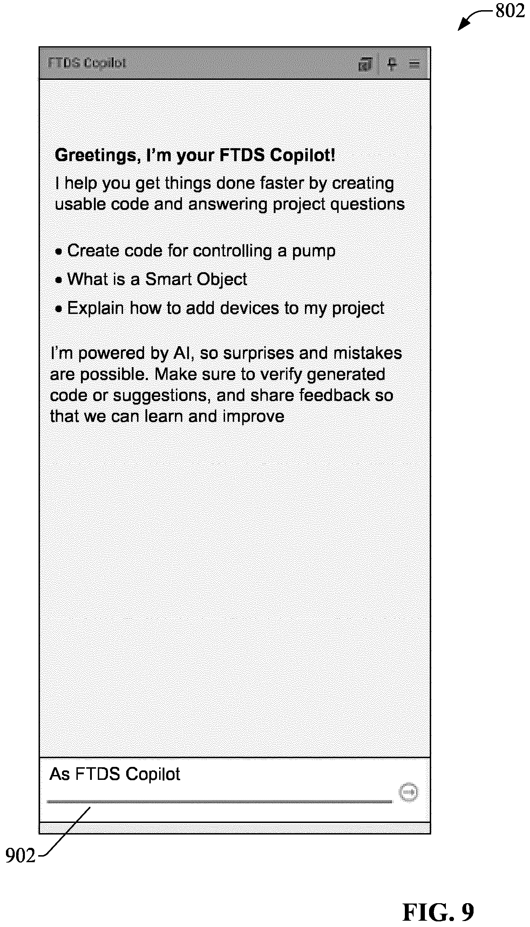

FIG. 8 is another view of the project development interface 602 in which the user has invoked a generative AI copilot window 802, through which the user can exchange prompts or chat conversations with the generative AI component 210. FIG. 9 is a view of the example copilot window 802 in isolation. In the illustrated example, the copilot window 802 is a chat window pinned to the right of the workspace canvas 606. However, any type of generative AI interface can be used to exchange prompts with the IDE system's generative AI component 210. The copilot window 802 displays a text summary explaining the types of assistance that the copilot can provide, and a data entry field 902 in which the user can enter natural language requests or queries.

Embodiments of the industrial IDE system 202 can use prompt engineering services to process natural language requests or queries submitted by the user via the copilot window 802 (or via a spoken word interface). These prompt engineering services can leverage industry knowledge encoded in the custom modules 222 (as learned from training data 402), together with responses 406 prompted from the generative AI model 306, to accurately ascertain a developer's design needs and generate portions of a system project 302 to address those needs, or to provide refined answers to design queries.

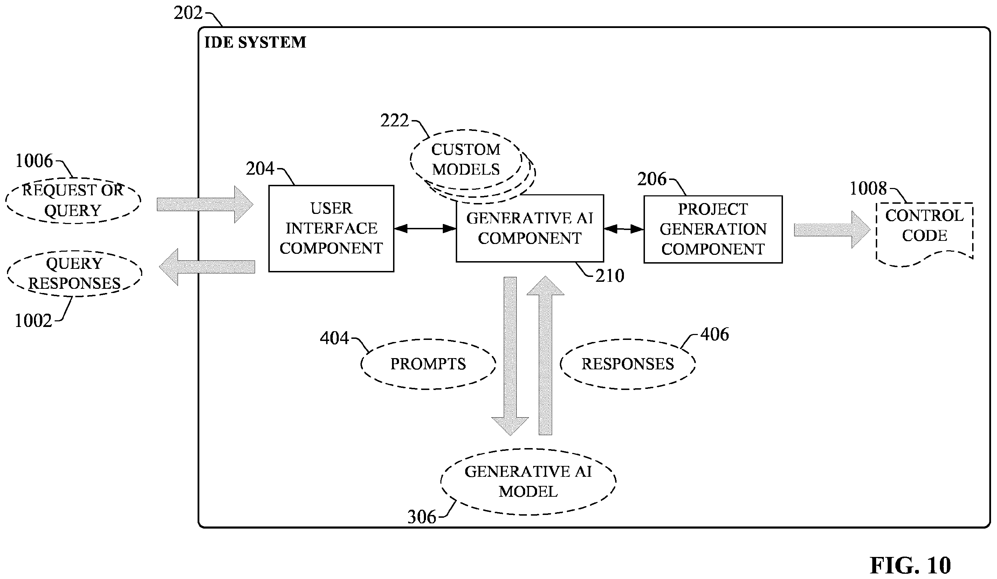

FIG. 10 is a diagram illustrating the use of industry-specific prompt engineering in connection with generating control code 1008 or other aspects of a system project 302, as well as generating responses 1002 to design queries submitted by a developer via the copilot window 802. When a user submits a natural language design request or query 1006 to the IDE system 202 (e.g. via the copilot window 802 or another type of interface), the generative AI component 210 analyzes the query 1006 based on domain-specific industrial knowledge and design rules encoded in the custom models 222 (that is, the knowledge and rules represented by training data 402). Based on this analysis, and depending on the nature of the request or query 1006, the generative AI component 210 generates and returns a response 1002 to the query (e.g., an answer to a question about control code being viewed, guidance as to an appropriate development tool or control programming instruction that can be used to solve a design problem specified by the query 1006 etc.) or generates a portion of control code 1008 that satisfies a design requirement conveyed by the request or query 1006.

In addition to referencing the information contained in the custom models 222, the generative AI component 210 can also, as needed, prompt the generative AI model 306 for responses 406 that assist in generating suitable responses 1002 or control code 1008 in response to the user's natural language request or query 1006. For example, in response to receipt of a natural language request or query 1006, the generative AI component 210 can determine whether a sufficiently accurate response 1002 to the query 1006 (or suitable control code 1008 satisfying the user's design request) can be generated based on relevant information contained in the custom models 222 alone, or, alternatively, whether supplemental information from the generative AI model 306 is necessary to formulate a response 1002 having a sufficiently high probability of satisfying the user's request or query 1006 (or to generate documented control code 1008 having a sufficiently high probability of satisfying the design request conveyed in the query 1006). If supplemental information from the generative AI model 306 is deemed necessary, the generative AI component 210 can formulate prompts 404 based on analysis of the request or query 1006 and the industrial knowledge encoded in the custom models 222. These prompts 404 are designed to obtain responses 406 from the generative AI model 306 that can be used to formulate accurate and cohesive responses 1002 to the user's query, or to generate documented control code 1008 that satisfies the user's natural language design request. For example, in the case of formulating responses 1002 to a user's question about control code, or about design tools supported by the IDE system 202, the generative AI component 210 can aggregate information from the custom models 222 determined to be relevant to the query (e.g., control code instruction reference information, industrial design standard information, vertical-specific industrial standards, knowledge of the IDE system's development platform, etc.) with language-specific compositional or syntax information obtained as responses 406 from the generative AI model 306 to formulate a natural language answer to the user's query 1006.

In another example scenario, a user wishing to generate control code 1008 for carrying out a specific control function, or who has a question about an existing control program being viewed on the development interface 602, can submit an initial natural language request or query 1006 that broadly states the functional requirement or query. The generative AI component 210 can parse this initial request to determine the type of information or service being requested, and refine and contextualize the initial query in a manner expected to assist the custom models 222 and the generative AI model 306 to quickly and accurately arrive at the desired answer or design solution. If the generative AI component 210 determines that additional information from the user would yield a response having a higher probability of satisfying the user's initial request (that is, a probability that exceeds a defined threshold), the generative AI component 210 can formulate and render one or more query responses 1002 that prompt the user for more refined information that will allow the generative AI component 210 to provide a more complete or accurate solution to the user's request (that is, a response to the user's request or query 1006 estimated to have an accuracy in excess of a defined threshold). Through iterations of such chat exchanges, the generative AI component 210 can collaborate with the user in exploring potential content variations likely to satisfy the user's needs. The generative AI component 210 can guide these natural language dialogs with the user based in part on learned knowledge of the types of questions that need to be answered in order to generate control code 1008 that aligns with user's needs, or to provide responses 1002 having a high probability of addressing the user's queries 1006.

In addition to allowing the user to submit free-form requests and queries 1006, some embodiments of the user interface component 204 can present pre-composed or pre-loaded prompts to the user for selection and submission to the generative AI component 210. These pre-composed prompts can represent IDE questions or development tasks that are commonly submitted by users of the IDE system 202. In an example scenario, the user interface component 204 may render 10 of the most common questions or requests submitted by users of the IDE system 202 as a list of selectable natural language prompts, where selection of a prompt from the list causes the prompt to be submitted to the generative AI component 210 for processing. If appropriate, the user interface component 204 can allow the user to customize one or more parameters of a selected pre-loaded prompt to accord with a specific need (e.g., by indicating a specific section of control code, a data tag, a controller definition, a program instruction, or an industrial asset to which a question represented by the pre-written prompt is to be directed).

The generative AI component 210 can use a range of approaches for processing a natural language request or query 1006 submitted by the user, and for formulating prompts 404 to the generative AI model 306 designed to yield responses 406 that assist with the user's request or query 1006. According to an example approach, the generative AI component 210 can access an archive of chat exchanges between the generative AI component 210 and other users and identify chat sessions that were initiated by user queries having similarities to the initial query 1006 submitted by the present user. Upon identifying these archived chat sessions, the generative AI component 210 can analyze these past chat sessions to determine types of information that were ultimately generated as a result of these sessions (e.g., control code 1008 having features or elements that are a function of specific keywords of the user's query, a specific type of information about a system project 302 that was ultimately determined to be sought by the user, etc.), and either generate an output (e.g., control code 1008 or a response 1002) based on the results of these past chat sessions and adapted to the user's initial request or query 1006, or, if necessary, generate a prompt 404 for submission to the generative AI model 306 designed to obtain a response 406 comprising the necessary type of information.

Analysis of these archived chat sessions, as well as any other relevant industrial knowledge or expertise encoded in the custom models 222, can also assist the generative AI component 210 in inferring the user's needs from an initially vaguely worded request or query 1006, and to generate a response 1002 addressing these needs. If the generative AI component 210 determines that supplemental information from the generative AI model 306 is necessary to formulate a response 1002 having a sufficiently high probability of satisfying the user's request or query 1006 (or to generate documented control code 1008 having a sufficiently high probability of satisfying the user's design request), the generative AI component 210 can also formulate a prompt 404 designed to prompt the generative AI model 306 for at least a portion of the information inferred to be of interest to the user. This may include, for example, formulating the prompt 404 to request, from the generative AI model 306, a specific type of information or control code 1008 that may not have been specified in the user's request or query 1006 but which the generative AI component 210 ascertained to be the information or code that would address the user's needs. In this way, the generative AI component 210 and its associated custom models 222 can actively frame a user's natural language request or query 1006 in a manner that quickly and accurately leads the generative AI model 306 to the user's desired results (e.g., generation of control code 1008 satisfying design constraints implied by the query 1006, an answer to a question about submitted control code, etc.).

In another example approach, the generative AI component 210 can enhance the user's query 1006 with additional information from the custom models 222 that contextualizes the user's request, and integrate this additional information with the user's query 1006 to yield the prompt 404 submitted to the generative AI model 306. The types of additional contextual information added to the query 1006 can depend on the nature of the query 1006 and can include, but are not limited to, information obtained from vendor knowledgebases or device documentation for industrial devices known to be relevant to the user's query 1006 (or instructions to link to those sources of information in order to obtain necessary information for responding to the user's query 1006).

In another example, the generative AI component 210 can infer the user's level of expertise based on the wording of the natural language request or query 1006 and frame the prompt 404 or the query responses 1002 based on this inferred level of expertise. The user's level of expertise can be inferred, for example, based on a determination of whether the words, phrases, or terms used to formulate the original query 1006 are likely to be used by one of relatively advanced expertise who can be expected to understand more technically advanced responses 1002 or, alternatively, a layman who may require more fundamental information included in the responses 1002.

For users at these various levels of expertise, the generative AI component 210 can word any query responses 1002 to the original query 1006 - including responses 1002 prompting the user for additional information to assist the generative AI model 306 in arriving at results or responses 1002 likely to answer the user's queries - at a level deemed appropriate to the user's inferred level of presumed understanding. This can affect the choice of words used in the response 1402, as well as the granularity of the response's content.

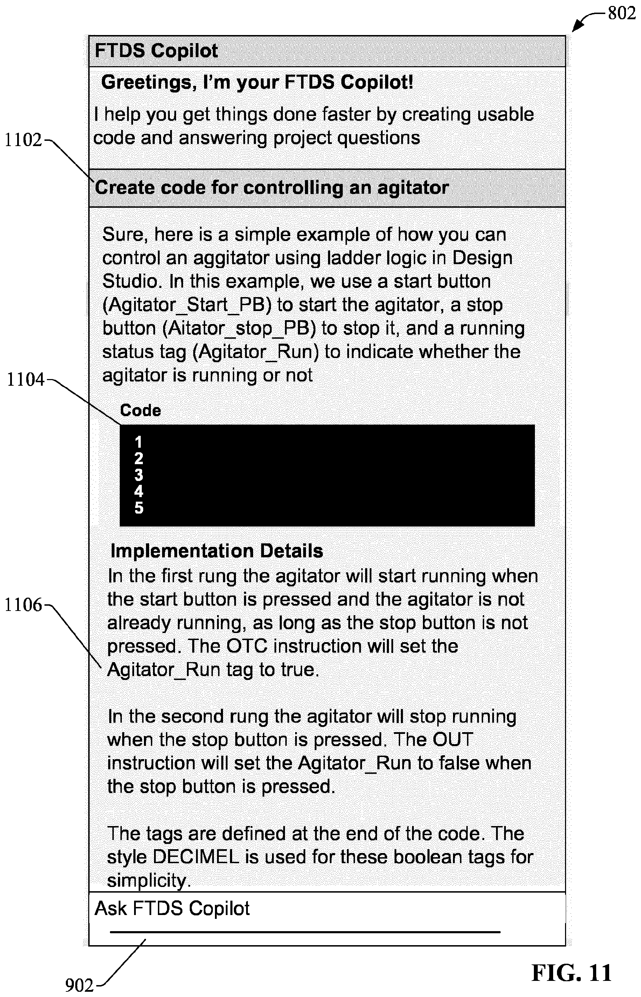

As noted above, a user can exchange queries 1006 and responses 1002 with the IDE system's generative AI component 210 via the generative AI copilot window 802 in some embodiments (although other interfaces for interacting with the IDE system's generative AI functionalities are also within the scope of one or more embodiments). FIG. 11 is a view of the copilot window 802 illustrating use of the generative AI copilot to generate code based on a user's natural language request or query 1006. A user can enter, in data entry field 902, a natural language description of control code required for a system project 302 currently being developed. This natural language prompt can provide such information as a functional requirement for the code, types of equipment to be controlled by the code, a desired format for the code (e.g., ladder logic, structured text, function block diagram, industrial DSL, Python, C#, etc.), descriptions of control conditions for controlling the state of an output device (e.g., a motor drive, a valve, an indicator light, etc.), or other such descriptors. In the example illustrated in FIG. 11, the user has entered the prompt "Create code for controlling an agitator." In response to submission of this prompt, the generative AI component 210 can generate one or more examples of control code determined to satisfy the requirements set forth in the prompt. The generative AI component 210 can generate this example control code based on analysis of the user's natural language request or query 1006, knowledge encoded in the custom models 222 determined to be relevant to the request (e.g., domain-specific industry knowledge, information about available control code instructions or AOIs supported by the IDE system 202, etc.), and responses 406 prompted from the generative AI model 306 by the generative AI component 210 (via prompts 404).

When displaying a control code recommendation in response to a user's request, the copilot window 802 can display the user's original prompt in a prompt window 1102, the recommended control code in code window 1104, and natural language implementation details 1106 that provide additional information or context about the recommended control code. The recommended control code can be rendered in code window 1104 in any control code format, including but not limited to structured text, industrial DSL, ladder logic, Python, C#, or another format. In some embodiments, the copilot window 802 can allow the user to switch the view of the proposed control code between two or more formats.

Example implementation details 1106 can describe how the recommended code functions; the purpose of the various rungs, instructions, or data tags contained in the code; suggestions for integrating the recommended control code into the user's in-progress control routine or system project 302; or other such information. In the illustrated example, the code implementation details 1106 generated by the generative AI component 210 read as follows:
"In the first rung the agitator will start running when the start button is pressed and the agitator is not already running, as long as the stop button is not pressed. The OTC instruction will set the Agitator_Run tag to true. In the second rung, the agitator will stop running when the stop button is pressed. The OUT instruction will set the Agitator_Run to false when the stop button is pressed. The tags are defined at the end of the code. The style DECIMEL is used for these Boolean tags for simplicity."

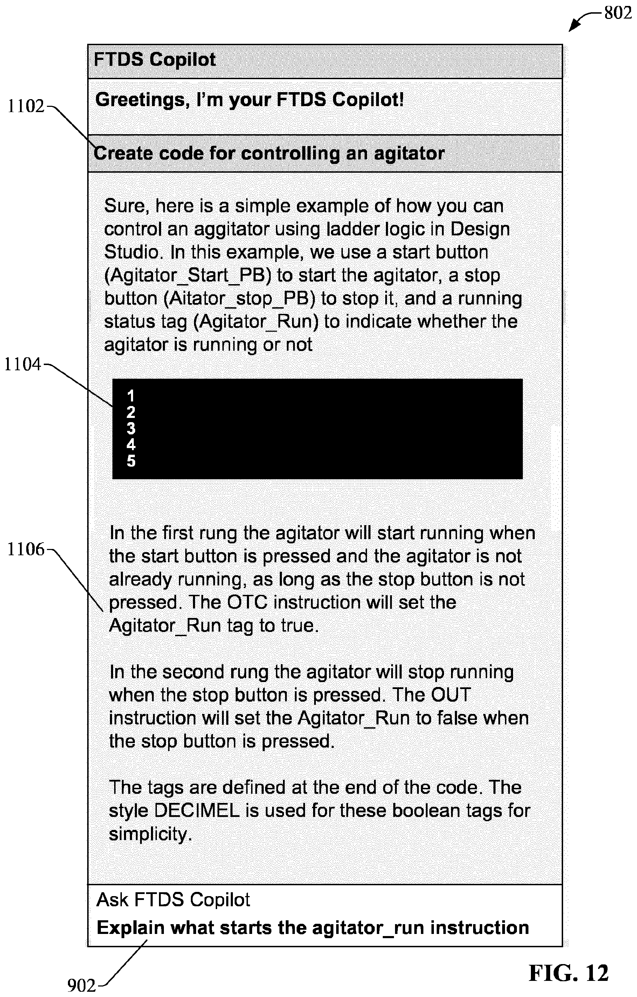

Based on the user's review of the proposed code presented in code window 1104 as well as its implementation details 1106, the user may choose to accept and integrate the proposed code into the current system project 302. Alternatively, the user may choose to continue the generative AI dialog with the IDE system 202 to either ask questions about the proposed code or to propose edits or refinements to the proposed code. FIG. 12 is a view of the copilot window 802 in which, after the generative AI component 210 has generated and rendered recommended control code in code window 1104 in response to the user's initial prompt (which remains displayed in prompt window 1102), the user has submitted a request for specific information about the proposed code in data entry field 902. In the illustrated example, the user has submitted the prompt "Explain what starts the agitator_run instruction," where "agitator_run" is the name of a data tag used in the proposed code.

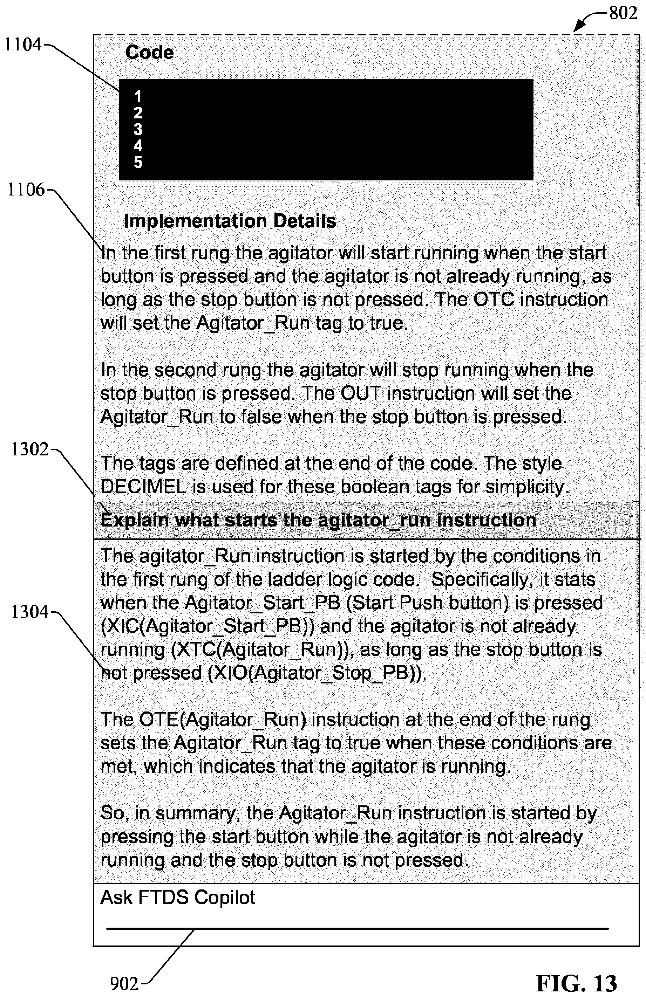

FIG. 13 is another view of a portion of the copilot window 802 in which the window 802 has rendered a natural language response 1304 to this request for additional information. As in the case of the original prompt requesting the agitator code, the user's follow-up request is rendered in a prompt window 1302, and the response 1304 to the request - generated by the generative AI component 210 based on the industrial knowledge encoded in the custom models 222 as well as responses 406 prompted from the generative AI model 306 - is rendered below this prompt window 1302. In the illustrated example, the response 1304 reads as follows:
"The Agitator_Run instruction is started by the conditions in the first rung of the ladder logic code. Specifically, it starts when the Agitator_Start_PB (Start Push Button) is pressed (XIC(Agitator_Start_PB)) and the agitator is not already running (XTC(Agitator_Run)), as long as the stop button is not pressed (XIO(Agitator_Stop_PB)).
"The OTE(Agitator_Run) instruction at the end of the rung sets the Agitator_Run tag to true when these conditions are met, which indicates that the agitator is running.
"So, in summary, the Agitator_Run instruction is started by pressing the start button while the agitator is not already running and the stop button is not pressed."

The generative AI copilot can generate answers or responses to substantially any type of question or request for information about the proposed control code, including but not limited to requests to explain specific functionalities of the control code or portions thereof, requests to explain the function of a selected control instruction (e.g., a PID instruction) or data tag included in the recommended control code, requests for suggestions as to how the recommended code should be integrated into the primary control code already being developed using the IDE system 202, or other such requests.

The generative AI component 210 can also use the custom models 222, together with responses 406 prompted from the generative AI model 306, to generate and embed documentation or comments within the generated code. This embedded documentation can include, for example, natural language descriptions of the functions of respective portions of the control code (e.g., ladder logic rung comments, comment lines included in the text-based view of the code, etc.), names of variables used in the control code (e.g., a description of the variable's function, or the metric represented by the variable's value), instructions for using the code, or other such documentation. In some cases, the generative AI component 210 can generate at least some of the embedded documentation based on natural language functional descriptions included in the user's original prompt, appending portions of the user's descriptions (or modified variations of those descriptions) into the code where appropriate. The generative AI component 210 can also generate portions of this program documentation based in part on content stored in one or more of the custom models 222 (e.g., pre-written documented control code samples, device documentation, standards documentation, training data 402, etc.) as well as program documentation text generated by the generative AI model 306 in response to prompts 404 submitted by the generative AI component 210.

In some scenarios, the user may request modifications or edits to the model's recommended control code prior to integrating the code into the main system project 302. These requests can also be submitted as follow-up natural language prompts via data entry field 902. In this way, the user can carry out a dialog exchange with the generative AI model 306 that iteratively refines the recommended control code in accordance with the user's needs. As an example modification that can be requested via a natural language prompt, the user may request that an instruction type included in the recommended code be replaced by another specified instruction (e.g., "Change the OTL and OUT instructions to OTE."). In response to such a request, the generative AI component 210 can update the recommended control code displayed in window 1104 to make the requested substitution. Other types of edits that can be requested and implemented in this manner can include, for example, changes to selected parameter values associated with program instructions included in the code (e.g., timer delay values, counter values, etc.), duplication of a line or rung of control code, addition or removal of a line or rung of code, modifications to variable names or addresses, or other such edits.

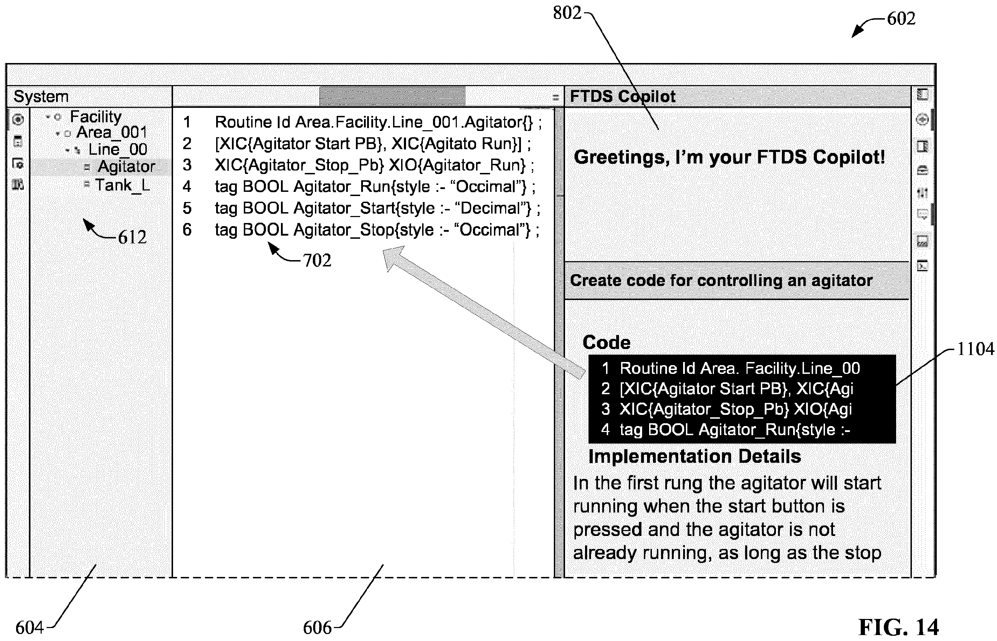

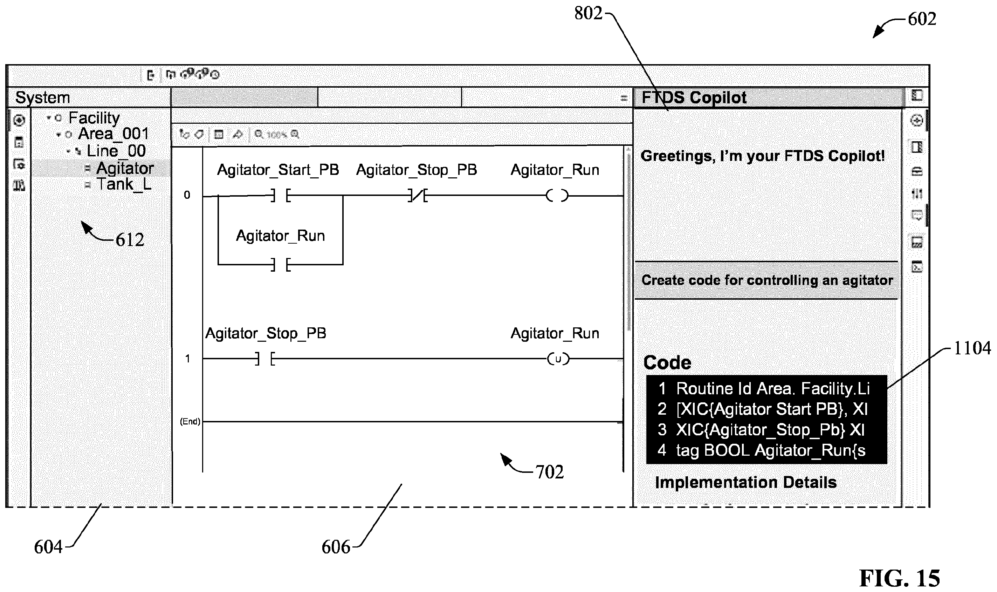

When the user is satisfied with the control code recommended by the copilot, the user can choose to integrate the recommended code into their larger system project 302. FIG. 14 is a view of the development interface 602 depicting integration of the generated control code into the user's control code 702. At any time, the user can instruct the development interface 602 to copy the generated control code displayed in window 1104 to the control code 702 displayed in the workspace canvas 606. The generated code can be inserted at a specified location of the control code 702 or added to the project as its own routine. In the example depicted in FIG. 14, both the generated control code in window 1104 and the primary control code 702 are displayed in a text-based format. However, the development interface 602 allows the user to selectively switch between a text-based view and a graphical view (e.g., ladder logic) of the control code, allowing the user to view and edit control code in either format. FIG. 15 is a view of the development interface in which the control code 702 is rendered in the workspace canvas 606 in ladder logic format.

Some embodiments of the IDE system 202 allow different customers to maintain their own customer-specific libraries in which are stored proprietary or preferred custom code segments for various types of functionality, AOIs, smart objects, in-house control programming standards, or other such customer-specific content. In such embodiments, when a request or query 1006 is submitted to the IDE system 202 by a user associated with a given customer, the generative AI component 210 can access and incorporate the content of that customer's proprietary libraries in connection with generating the response 1002 or control code 1008. This can include, for example, generating control code 1008 that conforms to in-house programming standards (e.g., in terms of nomenclature conventions or preferred programming structure) defined in the customer-specific library, incorporating pre-written custom code segments where appropriate, or otherwise generating responses that accord the customer's proprietary standards and programming preferences.

The development tools supported by the IDE system 202 allow the user to combine explicit control programming with generative AI assisted development to create, edit, and deploy control system projects 302, including industrial control code 1008. In addition to, or as an alternative to, using the generative AI copilot window 802 to exchange natural language development dialogs with the generative AI component 210, some embodiments of the IDE system 202 can support in-line submission of user development prompts. In such embodiments, the user can submit requests or queries 1006 via interaction with the workspace canvas 606 as an alternative to using the copilot window 210. For example, the user interface component 204 can allow the user to right-click on a program element (e.g., a ladder logic rung, a program element such as an instruction or output coil, etc.) or on the workspace canvas background to invoke a generative AI chat dialog window, which is rendered as an overlay on the workspace canvas 606. This overlayed dialog window acts as an interface through which the user can exchange natural language requests or queries 1006 and query responses 1002, similar to those exchanged using the copilot window 802. If a request or query 1006 submitted via this dialog window results in control code 1008 being generated by the generative AI component 210, the user interface component 204 can insert this resulting generated code 1008 directly into the control program being edited in the workspace canvas 606 (e.g., below the line, rung of code, or location on the workspace canvas 606 that was right-clicked to invoke the generative AI dialog window).

In some embodiments, this inserted control code 1008 can initially be made provisional, such that integration of the inserted code 1008 is made contingent on acceptance by the user. For example, the user interface component 204 can highlight or otherwise graphically distinguish the newly inserted code 1008 to indicate that the code 1008 has not yet been integrated into the control program currently being viewed and developed. The user can review the provisional control code 1008 and select whether to integrate the code 1008 into the system project 302 or alternatively to reject the code 1008. As in previous examples, the user may also choose to request modifications to the provisional control code 1008 via natural language requests submitted to the generative AI component 210.

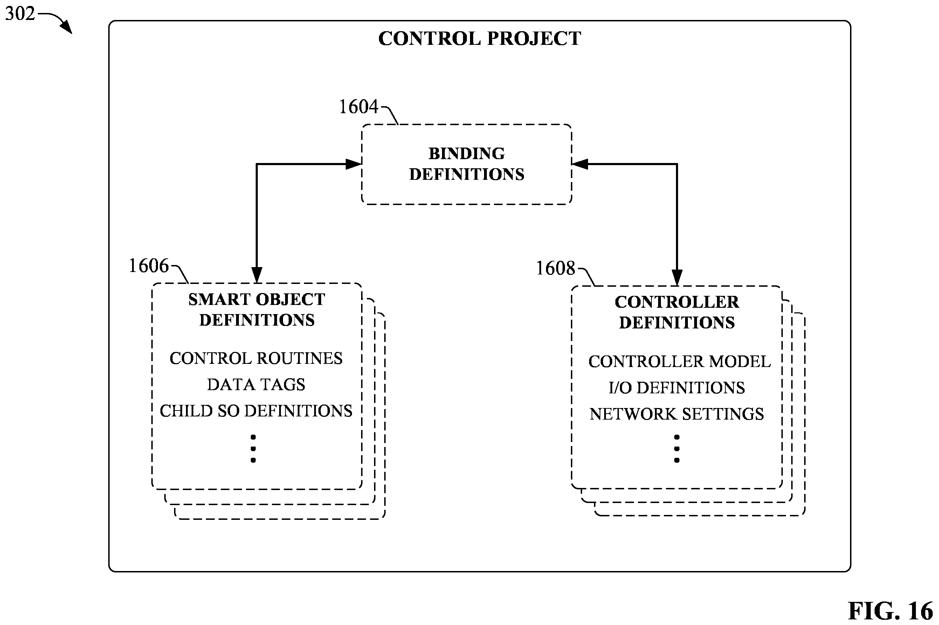

Some embodiments of the IDE system 202 allow the user either define a target industrial controller for the project 302 as an initial step in the project development process and to write or generate control code for that controller definition (which establishes that the code will be installed and executed on the industrial controller represented by the controller definition), or to develop control code in the workspace canvas 606 prior to assigning the code to a specific controller instance defined for the project 302. FIG. 16 is a representation of an example control project 302 that can be generated by embodiments of the industrial IDE system 202. Via interaction with the IDE system's development interface 602 (including explicit device configuration and programming interactions as well as generative AI-assisted interactions as described above), the user can create a control project 302 comprising multiple smart object definitions 1606. Each smart object definition 1606 comprises industrial control code (e.g., ladder logic routines or other types of control programming) and associated data tag definitions. The user may also define hierarchical parent-child relationships between smart object definitions 1606 if desired. These parent-child definitions create functional relationships between the control code associated with the respective smart objects.

In addition, the user can create one or more controller definitions 1608 as part of the control project 302. Each controller definition 1608 can specify an industrial controller 118 in terms of the vendor and model number of the controller 118, a user-defined name or identifier for the controller 118, the digital and analog I/O associated with the controller 118 (including configuration information for the controller's local and remote I/O modules), functions supported by the controller 118, a processing or storage capacity of the controller 118, or other such controller properties and functions. The user can also assign informational metadata to any of the controller definitions 1608 to record such information as the location of the controller 118 (e.g., an industrial facility, a production area, a geographic location, an automation system identifier, etc.), a process to be monitored and controlled by the controller 118, or other such user-defined information.

Once one or more smart object definitions 1606 and one or more controller definitions 1608 have been created, the user can selectively assign instances of any of the smart object definitions 1606 to any of the controller definitions 1608, thereby creating smart object bindings between the smart object definitions 1606 and the controller definitions 1608. These bindings are stored as part of the control project 302 as smart object binding definitions 1604.

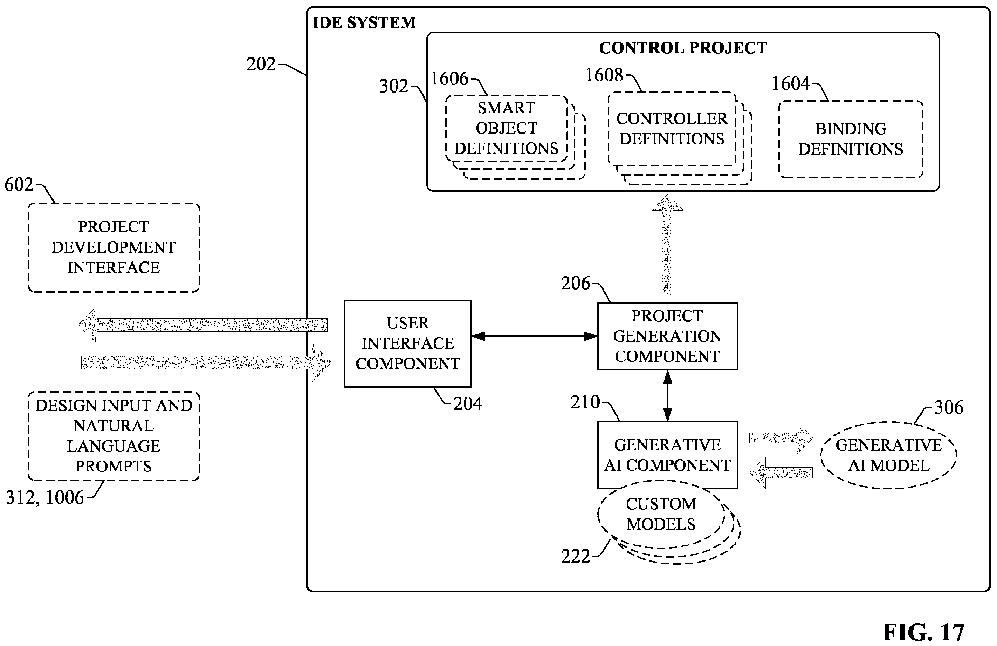

FIG. 17 is a diagram illustrating example data flows associated with creation of a control project 302 using IDE system 202 according to one or more embodiments. As noted above, through interaction with the project development interface 602, developers can submit design input 312, including natural language requests and queries 1006, to the IDE system 202. This design input 312, assisted by the submission and processing of generative AI requests and queries 1006 as described above, can include instructions to initiate creation of a new control project 302, control code (e.g., ladder logic programming, function block diagram programming, structured text, etc.), controller definitions 1608, smart object binding definitions 1604, and other such design input 312. The project generation component 206, assisted by the generative AI component 210 and its associated custom models 222, generates the control project 302 based on the design input 312 and generative AI prompts submitted by the user. As noted above, the resulting control project 302 can comprise one or more smart object definitions 1606, controller definitions 1608, and smart object binding definitions 1604.

Embodiments of the IDE system 202 support the ability to perform any of the initial project creation tasks described above using natural language generative AI requests or queries 1006 submitted by the user, thereby allowing users with little or no experience with the IDE system's development tools to initiate and develop elements of an industrial system project 302. For example, beginning with an empty workspace canvas 606, the user may submit (e.g., via the copilot window 802) a natural language request to initiate a new project, including a description of any number of project characteristics that may assist the generative AI component 210 in configuring the new project (e.g., a name of the project, a number of controllers or other devices to be included in the project, a type of industrial application or vertical for which the project 302 is being developed, etc.). An example natural language request to initiate a project may be, "Create a project called <project name> with two controllers." In response to this request, the generative AI component 210 can create an initial navigation tree 612 including icons representing the two controllers. Each of the two controllers has an associated controller definition 1608 whose initial configurations will depend on the amount of information about the controllers that was provided in the user's initial prompt. Once a project 302 has been initiated, the user can submit subsequent natural language requests to create a control program for the project 302 (e.g., "Create a ladder routine for me."), create smart object definitions 1606 for the project, or perform other project development tasks.

Each smart object definition 1606 comprises one or more industrial control programs or routines that are translatable to control code that can be executed on an industrial controller 118, as well as any data tags associated with the control programs (e.g., integer tags, Boolean tags, real tags, string tags, digital and analog I/O tags etc.). Upon creation, a smart object definition 1606 may not initially bound to a specific controller definition 1608. In some embodiments, the control programming and data tags that make up a smart object definition 1606 can be developed and edited without being bound to a specific industrial controller 118. This allows a user to develop industrial control programs - portions of which may comprise control code 1008 generated by the generative AI component 210 as described above - in a controller-agnostic manner without preliminary knowledge of the specific industrial controller 118 on which the programs will execute.

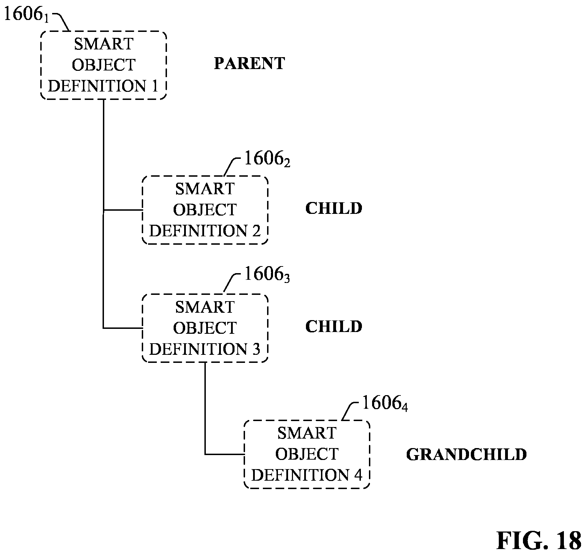

Some embodiments of the IDE system 202 also allow a user to define hierarchical parent-child relationships between smart object definitions 1606. These relationships can be specified as part of the smart object definitions 1606 themselves. For example, as part of a smart object definition 1606 for a first smart object, the user can specify one or more second smart object definitions 1606 that are to be designated child smart objects of the first smart object. FIG. 18 is a representation of an example set of smart object definitions 1606 for which a set of hierarchical relationships have been defined. In this example, smart object definition 1606₁ is a parent object having two child smart object definitions 1606₂ and 1606₃. In addition, smart object definition 1606₃ has an associated child smart object definition 1606₄, making smart object definition 1606₄ a grandchild of the parent smart object definition 1606₁.

These hierarchical relationships can dictate inheritance of smart object attributes between smart objects definitions 1606. For example, a smart object definition 1606₁ having one or more child smart object definitions 1606₂, 1606₃ will inherit the control programs or routines defined in those child smart object definitions 1606₂, 1606₃. The parent smart object definition 1606₁ will also inherit any child smart object definitions (e.g., 1606₄) of any of its direct child smart object definitions 1606. These inheritances affect the scope of content that is allocated to an industrial controller 118 when an instance of a smart object definition 1606 is assigned to the controller 118. For example, when an instance of a smart object definition 1606 having one or more child smart objects is assigned to an industrial controller 118, the project generation component 206 assigns the control programming associated with the parent smart object definition 1606 as well as the programming associated with the child smart object definitions 1606 to the controller 118.

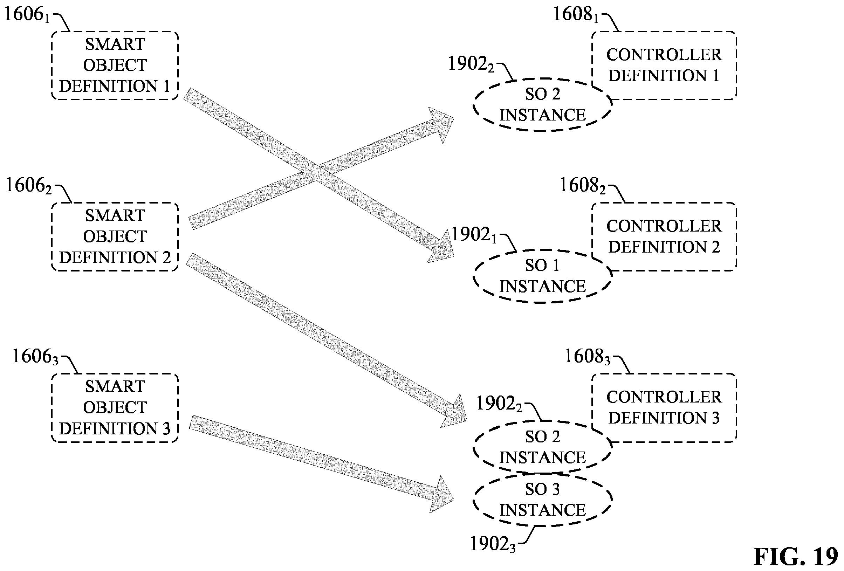

As noted above, smart object definitions 1606 may initially be unbound to a specific industrial controller 118. Once created, an instance of a smart object definition 1606 can be allocated to a selected controller definition 1608 created within the control project 302. FIG. 19 is a diagram illustrating allocation of smart object instances 1902 to selected controller definitions 1608. In this example, the user individually assigns each of three smart object definitions 1606₁, 1606₂, and 1606₃ to one or more of three available controller definitions 1608₁, 1608₂, and 1608₃ (which each represent a specific hardware controller 118). Specifically, smart object definition 1606₁ has been assigned to controller definition 1608₂, smart object definition 1606₂ has been assigned to both controller definition 1608₁ and controller definition 1608₃, and smart object definition 1606₃ has been assigned to controller definition 1608₃.

Each instance 1902 of a given smart object definition 1606 represents a distinct instantiation or copy of its base smart object definition 1606. When an instance 1902 of a smart object definition 1606 is assigned to a controller definition 1608, the control program routines and associated data tags defined by the smart object definition 1606 are allocated to the controller definition 1608, and the smart object binding definitions 1604 are updated to record this user-defined binding between the smart object definition 1606 and the controller definition 1608.

As illustrated in FIG. 19, some embodiments of the IDE system 202 can allow multiple instances 1902 of a single smart object definition 1606 - e.g., smart object definition 1606₂ in FIG. 19 - to be allocated to respective multiple controller definitions 1608. Assigning multiple instances 1902 of a smart object definition 1606 to multiple different controller definitions 1608 establishes that each of the physical controllers 118 represented by the controller definitions 1608 is to be allocated a copy of the control programming and data tag definitions defined by the smart object definition 1606. The project generation component 206 records these program allocations as part of the control project 302 - e.g., as smart object binding definitions 1604 - based on the user's selective assignment of smart object instances 1902. By supporting the ability to allocate individual instances 1902 of each smart object definition 1606 to any number of controller definitions 1608, the IDE system 202 can allow a given smart object definition 1606 - including its associated control programming and data tag definitions - to be easily reused and scaled across multiple controllers 118. This can simplify controller programming workflows in scenarios in which similar control functionality is to be applied to multiple separate automation systems.

Moreover, a given controller definition 1608 - such as controller definition 1608₃ in FIG. 19 - may be assigned instances 1902 of multiple different smart object definitions 1606, thereby allocating the control programs and data tag definitions of those multiple smart object definitions 1606 to the same industrial controller 118.

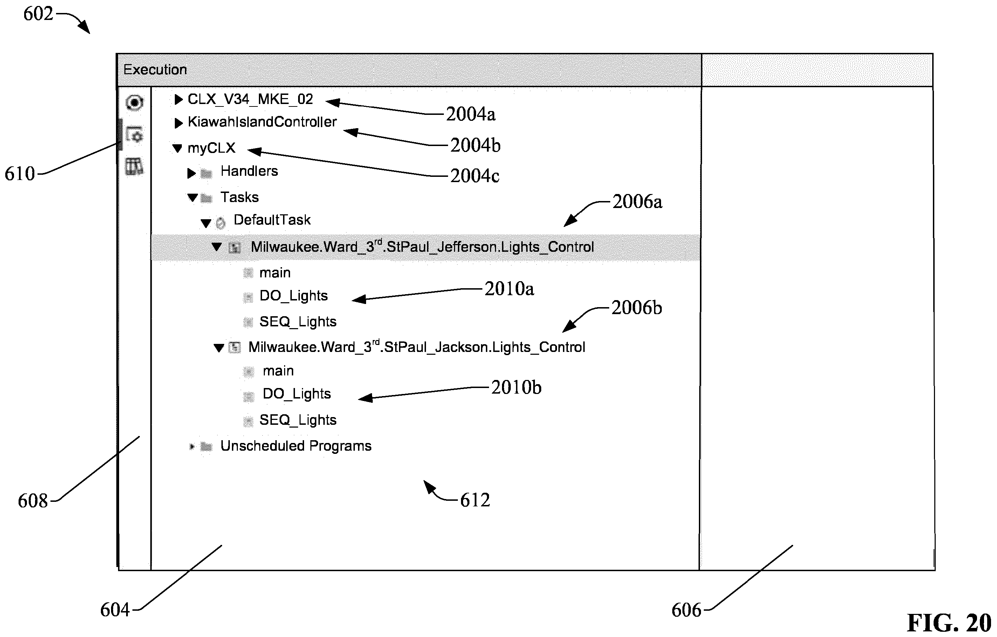

FIG. 20 is a segment of the project development interface 602 illustrating an example graphical depiction of the bindings between smart object definitions 1606 and controller definitions 1608. In this example, an Execution view has been invoked by selecting the Execution View explorer icon 610 in the explorer view control bar 608. In this view, the explorer panel 604 displays an execution view navigation tree 612 comprising controller nodes 2004 representing respective controller definitions 1608 that have been created for the control project 302. In this example, the user has created three controller definitions for the control project 302, named *XLX_V34_MKE_02, KiawahIslandController,* and *myCLX.* These controller definitions are represented by controller nodes 2004a - 2004c. As noted above, each controller definition 1608 can specify information about an industrial controller 118 that will be commissioned as part of an automation system, including but not limited to a vendor and/or model of the industrial controller 118, a user-defined name of the controller 118, identities of I/O modules associated with the controller 118, installation locations of the I/O modules (e.g., controller chassis slot numbers in which each I/O module is installed), network settings for the controller 118, or other such information. Any controller definitions 1608 created for the control project 302 by the user will appear in the execution view navigation tree 612 as a controller node 2004. In some embodiments, the user can invoke details of a controller definition 1608 by interacting with the controller node 2004 corresponding to the controller definition 1608 (e.g., by right-clicking on the controller node 2004 to invoke a window or panel that displays the controller configuration, or by left-clicking on the controller node 2004 to display the details in the workspace canvas 606).

Instances 1902 of a smart object definition 1606 that have been allocated to a controller definition 1608 - as described above in connection with FIGs. 16-19 - appear in the execution view navigation tree 612 as allocated smart object nodes 2006. Each allocated smart object node 2006 is organized in the navigation tree 612 below the controller node 2004 to which the smart object instance 1902 is allocated. Depending on the type of controller 118 represented by the controller node 2004, there may be one or more intermediate nodes organized hierarchically below the controller node 2004. In the example depicted in FIG. 20, controller node 2004c (representing the *myCLX* controller) has three child nodes representing different controller code categories - handlers, tasks, and unscheduled programs. Below the tasks node is a default task node, which is the task to which the smart object instance represented by node 2006a has been assigned. When an instance of a smart object definition 1606 is allocated to a controller definition 1608, the execution view navigation tree 612 is updated to add the allocated smart object node 2006 under the appropriate controller node 2004, and to add control routine nodes 2010 - representing control code routines defined by the smart object definition 1606 - below the allocated smart object node 2006.

In the example configuration depicted in FIG. 20, two different instances of the *Lights_Control* smart object definition 2006 have been allocated to the same controller *myCLX.* These two instances are represented by allocated smart object nodes 2006a and 2006b, respectively. As shown in FIG. 20, this yields two copies of the control routine nodes 2010a and 2010b below the controller node 2004 for the *myCLX* controller. This may be appropriate, for example, in scenarios in which a single controller 118 will be controlling two different but similar control systems.

Embodiments of the IDE system 202 allow users to leverage the generative AI component 210, its associated custom models 222, and the generative AI model 306 to assist with performing the various project development tasks described above in connection with FIGs. 16-20. This can allow users unfamiliar with the project development tools supported by the project development interface to create, develop, and edit control project 302 using natural language dialogs with the IDE system's generative AI copilot.

For example, if a user wishes to create a new control project 302 for an industrial automation system that is in the process of being designed and built, the user can submit a natural language request via the copilot window 802 asking the system 202 to create a new control project 302 (e.g., "Create a project called X," where X is the user-defined project name). In response to this request, the generative AI component 210 can create a new project instance and initialize the IDE system's development environment as needed to allow the user to begin creating control code (embodied as smart object definitions 1606 in embodiments that support the use of smart objects), controller definitions 1608, tag definitions, or other elements of the control project 302.

In some scenarios, if the generative AI component 210 determines that additional specifics about the new project's requirements which were not included in the user's initial natural language request would allow the generative AI component 210 to automatically create and configure elements of the system project 302 to align with the user's specific project requirements, the generative AI component 210 can render (e.g., via copilot window 802) a natural language request asking the user to provide these project specifics. This request can take the form of a question prompting the user for the type of industrial application for which the project 302 is to be developed (e.g., batch processing, die casting, sheet metal stamping, web tension control, machining or tooling, etc.), the identities of specific machines or industrial assets that are part of the automation system, or other such queries. The user can respond to these queries with natural language responses which are processed by the generative AI component 210, leveraging the industry knowledge contained in the custom models 222 and the generative AI model 306 as needed to interpret and translate the user's responses into pre-configured elements of the system project 302. Based on information about the automation system or process for which the project 302 is being developed, the generative AI component 210 can, for example, pre-configure an arrangement of control code routines appropriate for the type of control application to be developed, create data tags or smart object definitions 1606 expected to be required for the project 302, pre-configure a hierarchical navigation tree 612 comprising project elements expected to be required for the project 302 (e.g., nodes representing machines, devices, or stages of the automation system; nodes representing controllers or control routines, etc.), or configure other such aspects of the system project 302. In general, this approach can be used to easily and intuitively establish the development environment within which a system project 302 will be developed via an intuitive exchange of natural language prompts and responses between the generative AI component 210 and the user.

During development of a system project 302, generative AI dialogs can also be used to create smart object definitions 1606 and controller definitions 1608, and to bind selected smart object definitions 1606 to selected controller definitions 1608 as described above in connection with FIGs. 16-20. According to an example workflow, the user can submit, via copilot window 802, a natural language request to create a new smart object definition, providing any preliminary details about the smart object that may be useful in creating the object (e.g., "Create a smart object called CIP 100;" "Create a smart object for #1 Stamping Press," etc.). The generative AI component 210 can translate and process this request based on knowledge of the IDE system's development platform and instruct the project generation component 206 to create the requested smart object definition 1606 as part of the system project 302. The user can also generate control code to be associated with this smart object definition 1606 via generative AI prompts, as described above in connection with FIGs. 10-15.

Controller definitions 1608 can also be created via natural language generative AI prompts submitted by the user. Such prompts can include any degree of information about the controller 118 for which the controller definition 1608 is being created, including but not limited to the vendor and model of the controller, a name of the controller, identities of any I/O modules installed on the controller, an identify of a production line that the controller will be monitoring and controlling, or other such information. As an example prompt for creating a controller definition 1608, the user can submit "I need a controller for Stamping Press #3. It's a ControlLogix 5000 with an eight point digital output card and two twelve point digital input cards." The generative AI component 210 can process this prompt based in part on knowledge of the specified controller and I/O modules contained in the custom models 222 (e.g., based on training data 402 that includes product specification information for those devices) and, if necessary, responses 406 prompted from the generative AI model 306. Based on this processing, the generative AI component 210 instructs the project generation component 206 to generate a new controller definition 1608 whose properties align with the user's natural language specifications, and to add this controller definition 1608 to the current system project 302.

The degree to which the resulting controller definition 1608 is configured (e.g., in terms of the controller's I/O definitions, vendor and model information, network settings, controller name, production line allocation, etc.) can depend on the granularity of information about the corresponding controller 118 included in the user's natural language prompt. For example, in some scenarios the generative AI component 210 will create a controller definition 1608 that is configured to the degree possible based on the incomplete information contained in the user's prompt, allowing the user to manually configure any unconfigured properties of the definition's configuration. In some cases, if it is determined that the controller definition 1608 can be more fully configured if additional information about the corresponding controller 118 is known, the generative AI component 210 can iteratively request this additional information about the controller 118 before creating the definition 1608, and generate the controller definition 1608 based on the content of the user's original prompt and subsequent responses to requests for the additional information.

When a new controller definition 1608 or smart object definition 1606 is created by the generative AI component 210 in response to the user's natural language requests and queries 1006 as described above, the user interface component 204 can create a node in the navigation tree 612 representing the new device or object specified by the prompt. The IDE system 202 can also create other types of project elements in response to the user's natural language prompts, including but not limited to new data types, new system projects 302, new location or plant nodes within the navigation tree 612, or other such project elements. In some scenarios, the IDE system 202 can allow the user to create instances of selected project elements in bulk using a natural language prompt. For example, using natural language requests, the user can request creation of a specified number of instances 1902 of a specified smart object definition 1606, a specified add-on instruction or controller instruction, a specified data tag, a specified device definition, or other such project elements. In response to such requests, the generative AI component 210 can add the specified number of instances of the selected project element to the project 302.

The generative AI component 210 can also allow the user to allocate a selected smart object definition 1606 (or control code) to a selected controller definition 1608 using natural language requests or queries 1006. For example, the user may submit, via the copilot window 802, a prompt that identifies both the smart object definition 1606 and the controller definition 1608 and includes a request to associate the two (e.g., "Assign CIP100 to the #1 Headline controller," where CIP100 is the name of a specific smart object definition 1606). In response to this prompt, the generative AI component 210 can update the smart object binding definitions 1604 to link the specified smart object definition 1606 to the specified controller definition 1608 (as described above in connection with FIG. 19). Allocation of a smart object definition 1606 to a selected controller definition 1608 in this manner can be performed at any stage of development of either of the two definitions. For example, the user may submit, via copilot window 802, a natural language request to both create a new smart object definition 1606 and to allocate this new smart object definition 1606 to a specified controller definition 1608 that already exists in the project 302 (e.g., "Create a smart object called WDS200 and assign it to the Machining Line 2 controller"). Similar natural language prompts can be used to deallocate or reallocate smart object definitions 1606. In other scenarios, the user may create a smart object definition 1606 and its associated control code without initially binding the smart object definition 1606 to a specified controller definition 1608, and can then assign the smart object definition 1606 to one or more selected controller definitions.

Data tags defined in a smart object definition 1606 (or other type of control code) that correspond to digital or analog inputs or outputs of a controller 118 can be mapped to appropriate I/O addresses of the controller's I/O modules by the IDE system 202 when the smart object definition 1606 is assigned to the controller definition 1608. In some embodiments, this mapping between I/O data tags and physical I/O points of the industrial controller can also be performed using natural language instructions. For example, the user can submit a natural language prompt indicating that a digital input tag representing a pushbutton input defined in the smart object definition 1606 is to be mapped to a specified digital input address (or a specified input module) of the industrial controller represented by the controller definition 1608. In response to this prompt, the generative AI component 210 can define this mapping as part of the project 302, such that when the control code associated with the smart object definition 1606 is executed on the physical industrial controller 118, input signals to the specified digital input will control the value of the mapped data tag within the control routine.

While examples described above consider scenarios in which development of a smart object definition 1606 is completed before an instance 1902 of the smart object definition 1606 is allocated to a controller definition 1608, the IDE system 202 can also allow the user to specify an intended target controller definition 1608 for a smart object definition 1606 while development of the smart object definition 1606 is still in progress. If the user pre-selects an intended target controller definition 1608 for a smart object definition 1606 that is in the process of being developed, the project generation component 206 and generative AI component 210 can leverage knowledge of the capabilities of the specified target controller definition 1608 to provide real-time design feedback to the user during development of the smart object definition 1606. For example, as the user is creating the smart object definition 1606 - e.g., by entering or generating control programming and association instructions, as well as data tag definitions - the project generation component 206 can verify, in real-time, that the smart object properties and functionalities being entered by the user are compatible with the selected target controller definition 1608. This can include verifying that a control program instruction or function entered by the user as part of the smart object definition 1606 is supported by the target controller given the controller's functional capabilities, verifying that the smart object definition's I/O requirements do not exceed the available I/O defined in the controller definition 508 for each I/O type, or performing other such compatibility verifications.

If a smart object definition 1606 is already bound to a selected controller definition 1608 while development of the smart object's control code is in progress, this binding can also provide useful constraints on the IDE system's generative AI-assisted code generation for the smart object. For example, if the user submits a natural language request to generate control code for performing a specified control function and to assign this control code to the smart object definition 1606, the generative AI component 210 can reference technical specification information for the controller 118 corresponding to the controller definition 1608 to which the smart object definition is bound (e.g., technical specification information contained in the custom models 222 or prompted from the generative AI model 306) and, based on this information, generate control code that is capable of carrying out the requested control functionality and that is capable of execution by a controller 118 corresponding to the controller definition 1608. This can include, for example, ensuring that the control code only utilizes program instructions supported by the controller 118, ensuring that the I/O requirements of the control code do not exceed the available I/O defined in the controller definition 1608 for each I/O type, or otherwise ensuring that the resulting control code is supportable by the defined controller 118.

In some scenarios, the IDE system 202 can create controller definitions 1608 or other elements of a control project 302 based on natural language problem declarations submitted by the user via the copilot window 802. For example, rather than explicitly requesting creation of a controller definition 1608 as described above, the user can submit a natural language request or query 1006 for a suggested controller 118 and associated I/O modules for satisfying a control design requirement specified in the query 1006. Such natural language queries 1006 can specify such information as a type of industrial application to be executed by the controller 118 (e.g., a specified batch processing application, a sheet metal stamping application, an automotive die casting application, etc.), identities of devices or machine (or machine types) to be monitored or controlled by the controller 118, an industrial vertical in which the control application will operate (e.g., automotive, food and drug, mining, textiles, oil and gas, etc.), a performance requirement for the control application (e.g., a minimum product throughput, a minimum operation speed, a maximum expected machine downtime, a maximum energy consumption or emissions for the automation system, etc.), or other such information. Based on analysis of such natural language problem declarations (and leveraging custom models 222 and the generative AI model 306 as needed), the generative AI component 210 can determine a controller 118 of a suitable vendor and model, as well as a suitable configuration of the controller (e.g., an arrangement of I/O modules, network settings, etc.) capable of satisfying the design requirements inferred from the user's request, and create a controller definition 1608 representing this configured controller 118 for inclusion in the current system project 302. As in previous examples, the user may submit subsequent natural language requests for modifications to the recommended controller definition 1608 or its configuration if desired, and the generative AI component 210 will respond to these requests by modifying the controller definition 1608 in accordance with the user's feedback.

In addition to generating recommended control code in accordance with a user's natural language prompts, the generative AI component 210 can also answer the user's questions about the development platform itself. These questions can include, for example, requests for recommended program instructions, AOIs, or other available services of the IDE system 202 capable of performing a control or programmatic task specified by the prompt. As in the case of control code recommendations, the generative AI component 210 can generate an answer to such questions by suggesting one or more recommended program instructions (or AOIs) capable of satisfying the user's request together with a natural language description of the proposed instructions, including an explanation of how to use the instruction to perform the task described by the user's prompt. If the recommended program instruction or AOI has associated configuration parameters, the response generated by the generative AI component 210 can include recommended parameter settings for the instruction based on the task for which the instruction will be used (as specified by the user's initial prompt). In another example, the user can submit a natural language prompt asking how to perform certain tasks within the development platform, or requesting an explanation of a programmatic element or tool supported by the platform (e.g., "Show me an example of how to use a smart object," "Can this instruction be used to regulate my motor control signal?" etc. ) and in response the generative AI component 210 can generate an explanation or answer to the user's prompt, rendering the response in the copilot window 802 as a natural language output.

Some embodiments of the IDE system 202 can allow the user to submit feedback indicating the degree to which a response generated by the generative AI component 210 in response to the user's prompt satisfies the user's needs. In some scenarios, the user interface component 204 can render a feedback window after the response has been given, either automatically or in response to a user's request to submit feedback, and the user can rate the degree to which the response addressed the user's issue as specified by the prompt. The generative AI component 210 can use this feedback to further train or tune the custom models 222 to improve future responses to similar prompts.

While the examples described above considered scenarios in which the generative AI component 210 generates control code based on a user's natural language prompts, some embodiments of the IDE system 202 can also accept image data as part of design input 312, and the generative AI component 210 can translate content of the image data into control code. For example, an image of a piping and instrumentation diagram (P&ID) can be submitted to the system 202, and the generative AI component 210 can translate this image into control code capable of performing monitoring and control of the system represented by the P&ID.

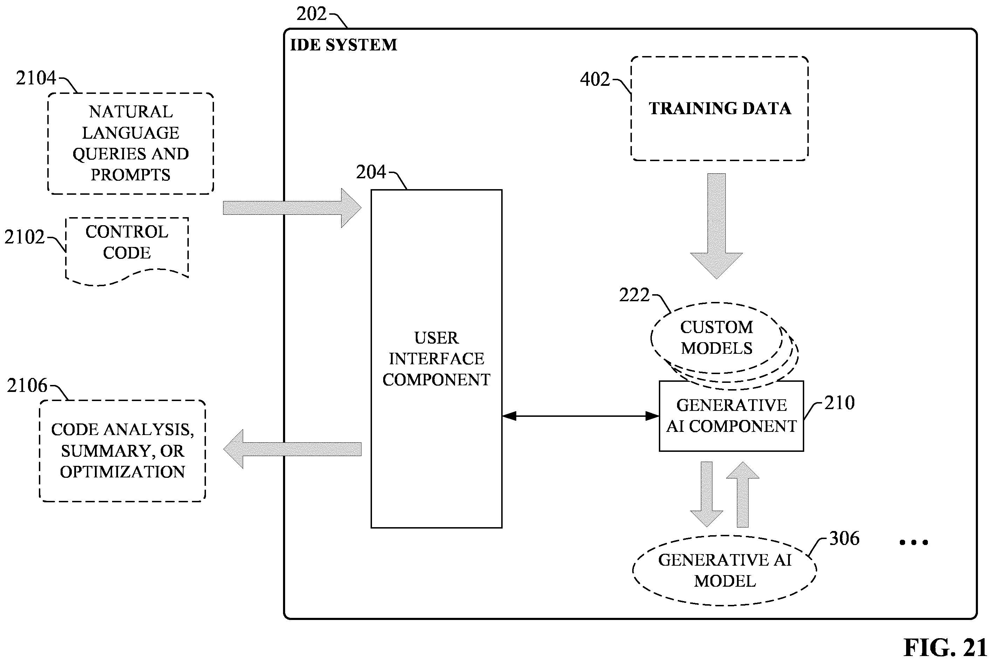

In addition to assisting with development of a new control code for a system project 302, the generative AI functions of IDE system 202 can also be used to analyze or optimize existing control code or control system projects, allowing users to submit prompts directed to the code. FIG. 21 is a diagram illustrating generative AI analysis of control code 2102 submitted to the IDE system 202. In some scenarios, control code 2102 to be analyzed by the IDE system 202 can comprise code (e.g., ladder logic, structured text, industrial DSL, function block diagrams, etc.) that was developed within the development platform of the IDE system 202 itself. Alternatively, control code 2102 that was developed using another development platform can be imported into the IDE system 202 for analysis (as depicted in FIG. 21). The latter case may be useful if a user has inherited unfamiliar control code 2102 that was developed by another user and wishes to learn about the code 2102 or to optimize the code 2102 to improve a specified performance metric.

The IDE system 202 allows the user to submit natural language queries or other prompts 2104 against the control code 2102, and the generative AI component 210, referencing the training data 402 contained in the custom models 222 as well as responses prompted from the generative AI model 306 as needed, can generate responses 2106 to these prompts 2104 based on analysis of the code 2102, as guided by the prompts 2104. Depending on the nature of the user's prompt 2104, these responses 2106 may be informational natural language answers to questions about the code 2102, summaries of the code 2102, recommendations for modifying the code 2102 in a manner that solves a performance issue specified by the prompt 2104, or other such responses 2106.

In an example scenario, a user may be unfamiliar with control code 2102 that is currently in service as part of an automation system, and wishes to learn about the code's functionality. To this end, the user can submit, as natural language prompts 2104, questions about specified sections of the code 2102 (e.g., "Explain the Conveyor routine to me", "What is the Stage 3 routine for?", "What's the purpose of the Drive1Status variable?", etc.). In response to such questions, the generative AI component 210 can generate and render a natural language response 2106 to the question based on analysis of the control code 2102, content of the custom models 222, and responses 406 prompted from the generative AI model 306. In connection with generating a response 2106 to the user's question about the control code 2102, the generative AI component 210 can, as needed, formulate prompts 404 for submission to the generative AI model 306 designed to obtain generative AI responses 406 that can be used to formulate an accurate response to the user's prompt 2104. These prompts 404 are formulated based on the information requested by the user (as obtained from the prompt 2104), content of the control code itself 2102, and any relevant subset of the industry knowledge and reference data encoded in the trained custom models 222, and are designed to obtain responses 406 from the generative AI model 306 that can be used by the generative AI component 210 to formulate accurate and cohesive responses 2106 to the user's prompt 2104.

In another example, the user may submit, as a prompt 2104, a question inquiring which section of the code 2102 is responsible for a specified control functionality (e.g., "Where is the routine the controls Conveyor 8?"). In response to this prompt, the generative AI component 210 can cause the development interface 602 to navigate to the relevant portion or routine of the control code 2102, and can also generate and render an explanation of how the relevant portion of the control code 2102 operates to perform the function in question. In a similar manner, the user can ask questions about specific devices or equipment referenced by the control code 2102 (e.g., "Explain Agitator 99"), and the generative AI component 210 will provide the requested explanation. As in the case of generative AI-assisted code generation, the generative AI component 210 can leverage any of the content of the custom models 222 (e.g., training data 402) discussed above in connection with analyzing the code 2102 to learn its various functions and naming conventions. The responses 2106 generated by the generative AI component 210 can also be based on a contextual analysis of the code 2102, which determines the type of control application or industrial vertical for which the code 2102 was created.

As in previous examples, natural language prompts 2104 directed to the control code 2102 can be submitted via either the copilot window 802 or via an in-line chat dialog window invoked by interacting with the control code 2102 within the workspace canvas 606. In the latter case, the user can invoke the in-line chat window by selecting (e.g., as a right-click selection) an element within the control code 2102, such as an instruction, a rung of ladder logic, an icon within the navigation tree 612 representing a routine of the control code 2102, etc.). When the chat window is invoked in this manner, the user interface component 204 can automatically set the selected element to be a parameter of the user's prompt 2104, such that the identity of the selected code element is submitted to the generative AI component 210 along with the prompt 2104. For example, the user may invoke the in-line chat window by selecting on an output coil of a ladder logic rung of the control code 2102, and enter, as a natural language prompt 2104, "Where else is this used?", "What device does this control?", "What turns this on?", "Why isn't this turning on?", or other such queries directed to the selected coil. In these scenarios, the user need not include the name or identifier of the control code element to which the prompt 2104 is directed; instead, the user interface component 204 sends both the user's natural language prompt 2104 and the identity of the selected control code element to the generative AI component 210, which uses this aggregate information to infer the nature and subject of the user's prompt 2104. This approach can also be used to simplify natural language requests to generate new control code. For example, the user may invoke the in-line chat window by selecting a normally open or normally closed contact of a ladder logic rung that is linked to a data tag value (e.g., the state of a specific valve), and enter, as a natural language prompt 2104 submitted via the chat window, a request to generate control code that uses the state of the data tag linked to the selected contact (e.g., "I need code that turns on the outlet motor when this is on," where the generative AI component 210 interprets "this" as referring to the selected data tag).

In addition to responding to prompts 2104 directed to learning about the control code 2102, the generative AI component 210 can also be configured to recommend or implement modifications to the control code 2102 based on natural language prompts 2104 submitted by the user. In an example scenario, the user may have acquired or inherited control code 2102 that may not conform to a desired industry or in-house programming standard, in terms of naming conventions or program structure preferences. The user can submit a prompt 2104 instructing the generative AI component 210 to modify the code 2102 as needed to comply with a specified standard (e.g., a standard defined by the training data 402 used to train the custom models 222). In response, the generative AI component 210 can perform the necessary modification, including renaming variables or restructuring portions of the code, to yield modified control code 2102 complying with the required standard. The generative AI component 210 may also render a natural language response 2106 summarizing changes made to the code 2102 to bring the code 2102 into compliance. At least some of these modifications can be performed based on industrial knowledge encoded in the custom models 222, which allows the generative AI component 210 to perform contextual analysis of the code 2102 to learn the type of industrial application or vertical for which the code 2102 was written. The generative AI component 210 can use this information as a factor in determining which industry standards apply to the code 2102 and how the code 2102 should be modified for compliance with those standards.

In another example, the generative AI component 210 can leverage the industrial training of the custom libraries 222, together with prompted responses 406 from the generative AI model 306, to recommend or implement modifications to the control code 2102 designed to improve a performance metric specified by the user via a prompt 2104, or to solve another type of specified problem with the code 2102. For example, the control code 2102 may be a control program that is currently in service on the plant floor - that is, the code 2102 has been deployed to an industrial controller 118 and is being used to monitor and control its corresponding automation system - and the user may seek recommendations for modifying the code 2102 to correct performance issues observed on the automation system. In such scenarios, the user may submit a prompt 2104 asking the system 202 to recommend modifications to the code 2102 that will improve a specified performance metric (e.g., "How can I reduce downtime occurrences of the #2 stamping press?", "How can I reduce energy consumption of the system?", "How can I reduce part cycle time without risking an increase in machine abnormal conditions?" etc.). In response to this prompt 2104, the generative AI component 210, using custom models 222 and prompted responses 406 from the generative AI model 306, can generate and render recommendations for modifying the code 2102 in a manner expected to satisfy the criteria indicated in the prompts 2104. In some cases, the generative AI component 210 can offer multiple proposed solutions to the problem defined by the prompt 2104, together with explanations of the relative benefits or potential downsides of the various offered solutions.

In some cases, the user's prompt 2104 may be less targeted toward a specific performance problem to be solved, but instead may be a request for the generative AI component 210 to analyze the control code 2102 to identify opportunities to optimize aspects of the code's performance, improve the clarity or legibility of the code 2102, or otherwise streamline the code 2102. In response to such requests, the generative AI component 210 can, for example, identify portions of the code 2102 that can be rewritten to reduce the overall amount of code without substantively altering the functionality performed by those portions of the code 2102, identify portions of the code 2102 that can be rewritten to reduce the number or distance of machine movements (and thus the amount of machine wear) used to carry out a control function, identify inconsistent variable naming conventions, identify poorly organized or unstructured code, or identify other such issues. Based on this assessment, the generative AI component 210 can either recommend or implement modifications to the code 2102 to address these identified issues. These recommendations can include, for example, recommended rewrites to poorly structured code to yield better organized code, recommended rewrites to consolidate redundant code, recommended rewrites estimated to improve a performance metric of the automation system to be monitored and controlled using the code 2102 (e.g., reduce an estimated number of unnecessary machine movements, improve a product throughput, reduce energy consumption or emissions, etc.), or other such recommendations.

In addition to control code 2102, some embodiments of the IDE system 202 can allow the user to submit other types of documentation for analysis by the generative AI component 210. For example, users may submit functional specification documentation for a new or existing automation system, and submit prompts 2104 directed to these functional specifications. These prompts 2104 can comprise questions about the automation system described by the functional specifications (e.g., "What are the control areas requiring control code to be generated?") as well as prompts 2104 that instruct the generative AI component 210 to generate control code for performing control functions required by the functional specifications.

The generative AI component 210 can access any of the custom models 222 and associated training data 402 described above in connection with generating control code that satisfies the user's prompts, as well as processing user prompts 2104 submitted against existing control code 2102. The training data 402 can include, but is not limited to, program instruction sets, libraries of pre-tested control code samples for various types of control or programmatic functions, programming manuals, industrial standards definitions (both global standards and customer-specific in-house standards), or other such libraries or data sources. Some custom models 222 may be global models that are accessible to all industrial customers subscribed to access and use the IDE system 202. In addition to these global custom models 222, a given industrial customer or enterprise may be allocated one or more custom models 222 trained using proprietary training data 402 provided by that customer. This customer-specific training data 402 can include customer-specific libraries that contain examples of a customer's preferred coding standards, functional standards, AOIs, program documentation standards, or other such customer-specific information. The generative AI component 210 can reference these customer-specific libraries in connection with generating control code recommendations (or recommendations for control code edits) so that all recommended control code (or a recommended code modification) conforms to the customer's in-house standards in terms of control program formatting, program documentation standards, variable naming conventions, AOIs or instructions used, UDTs, etc. The generative AI component 210 can also reuse prewritten code included in this training data 402 where appropriate to satisfy the functional requirements specified by the user's prompt.

The generative AI component 210 can also analyze undocumented control code 2102 - that is code 2102 containing no embedded comments or documentation explaining the purposes and functions of the various routines or code segments - in view of the custom models 222 to generate and embed documentation or comments within the submitted control code 2102. This embedded documentation can include, for example, natural language descriptions of the functions of respective portions of the control code 2102 (e.g., ladder logic rung comments, comment lines included in the text-based view of the code, etc.), names of variables used in the control code 2102 (e.g., a description of the variable's function, or the metric represented by the variable's value), instructions for using the code, or other such documentation. In some cases, the generative AI component 210 can generate at least some of the embedded documentation based content stored in one or more of the custom models 222 (e.g., pre-written documented control code samples, device documentation, standards documentation, training data 402, etc.) as well as program documentation text generated by the generative AI model 306 in response to prompts 404 submitted by the generative AI component 210. The generative AI component 210 can infer the functionalities of the various sections of control code 2102, so that suitable natural language program comments describing these functionalities can be generated, based on knowledge of various types of industrial verticals (e.g., automotive, pharmaceutical, food and drug, oil and gas, etc.), common control applications within those verticals, and knowledge of how these control applications are typically realized in terms of control code structures or characteristics.

As noted above, the custom models 222 used by the generative AI component 210 to formulate query responses 1002, 2106 as well as to formulate prompts 404 directed to the generative AI model 306 can be trained with industry-specific knowledge of various types of industrial control applications, as well as any vertical-specific standards or requirements associated with specific industrial verticals (e.g., food and beverage, pharmaceuticals, automotive, textiles, mining, die casting, etc.). The resulting trained custom models 222 allow the generative AI component 210 to generate control code recommendations for a user's system project 302, or to answer questions about the project 302 or code, based on an understanding of the type of industrial application or vertical for which the project 302 is being developed. To this end, the generative AI component 210 can perform contextual analysis on the user's existing control code or system project 302 to infer a type of industrial application for which the project is being developed, and can generate responses to user prompts - including control code recommendations or proposed edits - based on this application context. To carry out this contextual analysis, the generative AI component 210 can be designed to create references to internal project components, such as library instances, tags, states, and other relevant information.

During development of a system project 302, this contextual information, this contextual information can be used by the generative AI component 210 to generate responses to user requests, prompts, and queries 1006, 2104 - including recommendations for new control code or answers to the user's questions about the code - based in part on the portions of the system project 302 or control code that have already been developed, from which the generative AI component 210 can ascertain the type of industrial application for which the project 302 is being created. For example, the generative AI component 210 may be aware, based on content of the custom models 222, of standard control routines that are typically required for the type of control application being developed, and can generate recommendations to add any such routines that are not already present in the project 302. The contextual information may also dictate the model's responses to the user's questions about the control code and its functions; such that the system's answers to these questions explain the code's functionality within the context of the specific type of industrial application that the project 302 for which the project 302 is being developed.

Some embodiments of the IDE system 202 can support a testing framework for automation that verifies operation of control code (either previously written control code 2102 submitted to the system 202 or control code 1008 developed using the IDE system's development tools) or other aspects of the system project 302. As part of this testing framework, the IDE system's project testing component 212 can execute test scripts designed to execute one or more test scenarios against the control code. These test scripts can be associated with, and directed to, specific portions of the control code against which the test scenarios are to be applied.

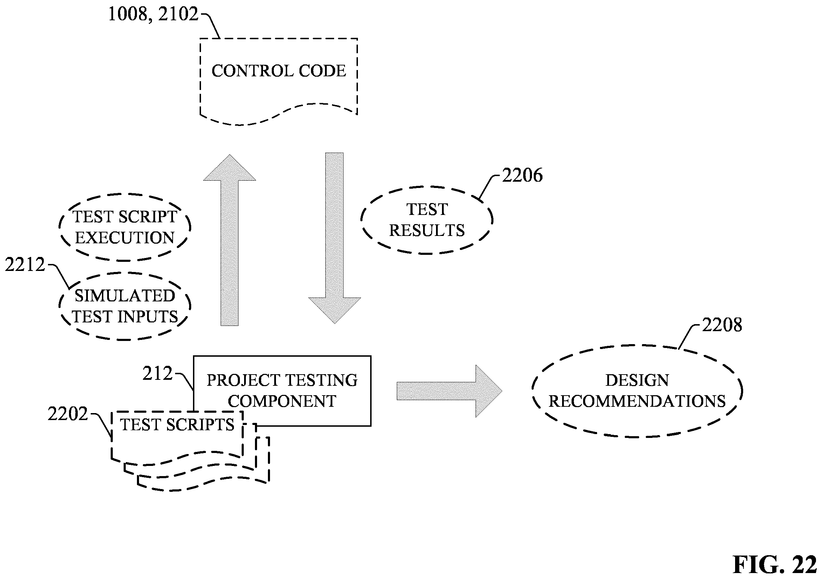

FIG. 22 is a diagram illustrating testing of example control code 1008, 2102 by the IDE system's project testing component 212. The project testing component 212 can be configured to execute test scripts 2202 designed to test and debug aspects of industrial control code 1008, 2102. This testing can comprise holistic testing the control code as a whole; testing of individual routines, lines, or code segments of the control code, testing specific instances of smart objects 422 included in the control code, or other types of testing. Each test script 2202 can define one or more test scenarios that may beneficially be run against a specific portion of the control code 1008, 2102 (e.g., a line or section of control code, a smart object or groups of inter-related smart objects used in the code, etc.). In some cases, the test scenarios encoded into the tests scripts 2202 can be designed based on industrial expertise regarding the control functions or industrial applications represented by the targeted portions of the control code 1008, 2102.

During or after development of control code 1008, 2102, the IDE system's project testing component 212 can execute test scripts 2202 against respective portions of the control code 1008, 2102 as needed to verify proper or expected responses, thereby validating the control code 1008, 2102. To this end, each test script 2202 can define simulated test inputs 2212 to be provided to the portion of the control code 1008, 2102 (e.g., a targeted section of the control code, a smart object or set of related smart objects, etc.) that the test script 2202 was designed to validate. The test script 2202 can also define expected responses of the targeted portion of code to the simulated inputs 2212 generated by the script 2202.

According to an example testing procedure, project testing component 212 can execute one or more test scripts 2202 associated with respective one or more portions or elements of control code 1008, 2102. Execution of the test scripts 2202 can involve, for example, feeding simulated test inputs 2212 to the control code 1008, 2102 according to a sequence defined by the test scripts 2212, setting values of digital or analog program variables defined by the control code 1008, 2102 according to a defined sequence, initiating control routines of the control code 1008, 2102 according to a defined sequence, verifying data linkages between control routines, confirming that device configuration settings or parameter values are appropriate for a given industrial application being carried out by the system project 302 with which the code is associated, or otherwise interacting with the system project 302 according to testing procedures defined by the test scripts 2202. During testing, the project testing component 212 can monitor test results 2206 or responses of the control code 1008, 2102 to the test interactions defined by the test scripts 2202 and determine whether these test results 2206 match expected results defined by the test scripts 2202. In this way, proper operation of the system project 302 can be verified prior to deployment.

In some test scenarios, test scripts 2202 can define testing sequences that are applied to the system project 302 as a whole in a holistic manner rather than to a specific control program or routine. For example, the project testing component 212 can execute test scripts 2202 that verify linkages or relationships across design platforms - e.g., control code, visualization applications, electrical drawings, panel layout definitions, wiring schedules, piping diagrams, etc. - that may otherwise not be tested.

If the test results 2206 indicate an improper operation of one or more aspects of system project 302, project testing component 212 may generate and render one or more design recommendations 2208 indicating possible modifications to the control code 1008, 2102 or other aspects of the system project 302 that would correct operation of the project 302. These design recommendations 2208 may include, for example, control code modifications or replacements, recommended corrections of data tag addresses, corresponding to an output device referenced by the control programming), recommended modifications to an industrial device's configuration parameters, or other such corrections.

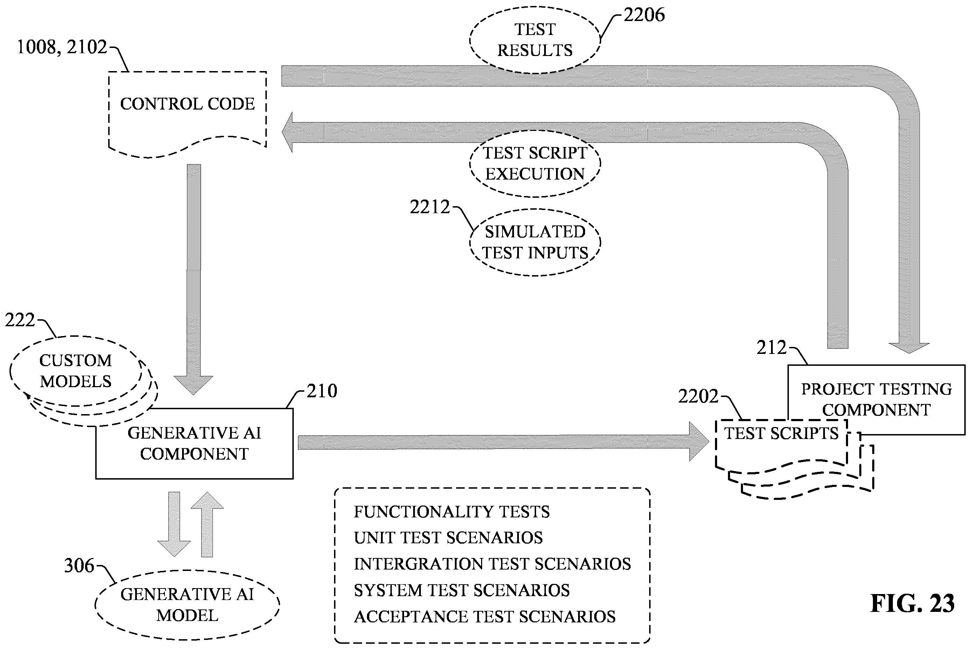

To mitigate the need for a system developer to create custom test scripts 2202 to validate operation of control code 1008, 2102 prior to deployment, some embodiments of the generative AI component 210 can be configured to use generative AI and the custom models 222 to automatically generate suitable test scripts 2202 designed to test and validate portions of the control code 1008, 2102. FIG. 23 is a diagram illustrating generation of test scripts 2202 by the industrial IDE system 202 using generative AI according to one or more embodiments. The generative AI component 210 can analyze control code 1008, 2102 using the trained custom models 222, as well as responses prompted from the generative AI model 306, to infer suitable test scenarios for validating the control code 1008, 2102. The determination of suitable test scenarios for control code 1008, 2102 to be validated can be based on the custom models' training on pre-learned industrial experience relating to different types of industrial applications, assets, processes, and safety standards. For each test scenario devised by the generative AI component 210 for the control code 1008, 2102 under analysis, the generative AI component 210 can generate one or more associated test scripts 2202, and may also define particular ways to apply the test script 2202 (e.g., specifying which routines of the control code 1008, 2102 to validate using one of the test scripts 2202, which other project elements should be cross-referenced for validation purposes using the test scripts 2202, etc.).

In an example scenario, the generative AI component 210 may infer, based on analysis of the control code 1008, 2102 using the custom models 222 and generative AI responses 406, an industrial vertical to which the control code 1008, 2102 relates (e.g., automotive, oil and gas, food and drug, textiles, mining, etc.), and generate contextual test scripts 2202 based on the identified vertical. In this regard, the custom models 222 may be trained with knowledge that certain industrial verticals mandate particular testing methodologies in connection with validating industrial control programming or other aspects of a system project, and these testing methodologies can be implemented by contextual test scripts 2202 generated by the generative AI component 210 as a function of the identified vertical. The generative AI component 210 can also identify specific types of control operations or industrial applications that respective sections of control code 1008, 2102 have been designed to carry out, and can formulate test scenarios and corresponding test scripts 2202 for verifying correct operation of those portions of the code 908, based on the model's training on validation measures for those types of control operations or industrial applications.

In various embodiments, the generative AI component 210 can, based on analysis of the control code 1008, 2102 and inferences of the types of validation tests that should be performed on the code prior to deployment, generate test scripts 2202 for validating that respective portions of control code 1008, 2102 will correctly perform functions that those portions were designed to carry out. The generative AI component 210 can also identify any instances of smart objects or grouping of interconnected smart objects that are included as part of the control code 1008, 2102 and generate test scripts 2202 for executing functional validation tests on these smart object instances. Other types of test scenarios for which the generative AI component 210 can generate test scripts 2202 can include, but are not limited to, scenarios designed to test units or devices determined to be part of the automation system to be controlled by the control code 1008, 2102, integration test scenarios, system test scenarios, factory acceptance test scenarios, or other types of tests. The generative AI component 210 can also leverage the custom models' training on industrial safety standards to generate safety test scenarios for validating the control code's compliance with any prevailing industrial safety standards, and generate test scripts 2202 for testing these scenarios.

During testing of the control code 1008, 2102, the project testing component 212 can execute the one or more test scripts 2202 in accordance with each test scenario defined by the generative AI component 210 in sequence in order to comprehensively validate proper operation of the control code 1008, 2102, in some cases across multiple platforms (control programming, visualization configuration, drawings, device configurations, etc.).

In some embodiments, generative AI component 210 can also generate a validation checklist based on analysis of the control code 1008, 2102 and output this validation checklist via the user interface component 204. This validation checklist can provide instructions regarding on-site tests and checks that should be performed in connection with commissioning the automation system for which the control code 1008, 2102is being developed. These may comprise tests that should be performed on the automation system hardware and electrical connections that cannot be performed via testing of the control code 1008, 2102 alone. Example validation checklists may include lists of I/O points whose connectivity should be verified, instructions to visually inspect panel-mounted equipment, sequences of manual operator panel interactions that should be performed to verify proper machine operation, or other such information.

The generative AI-enabled industrial IDE system 202 described herein simplifies the method by which industrial control code is written, configured, optimized, and documented. The IDE system's interface accepts natural language as input for requesting guidance or explicit coding recommendations for an industrial control application, allowing non-programmers to create accurate control code satisfying the application's functional requirements.

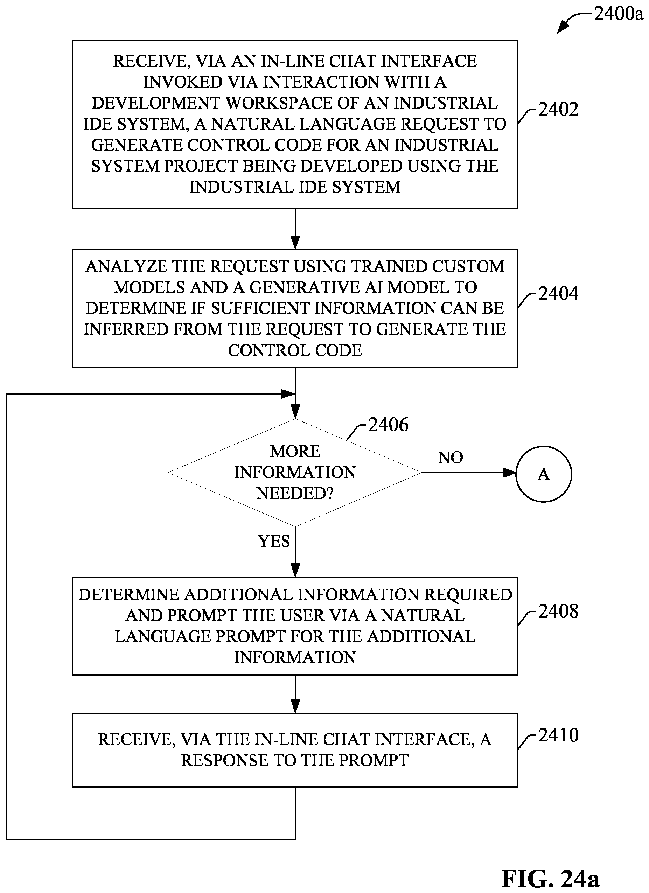

FIGs 24a-28b illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 24a illustrates a first part of an example methodology 2400a for using generative AI to assist in creation of industrial control code within an industrial IDE system. Initially, at 2402, a natural language request to generate control code for an industrial system project being developed using an industrial IDE system is received via an in-line chat interface associated with the industrial IDE system. The in-line chat interface can be invoked via an interaction with the IDE system's workspace canvas on which existing control code is being written or edited; for example, by right-clicking on an element of the control code (e.g., a ladder logic rung or output coil, a control instruction, etc.) or on an empty point of the workspace canvas. The in-line chat interface can be rendered as an overlay on the workspace canvas on or near the location at which the user invoked the interface. The user's initial natural language request may be worded at any level of detail or granularity, and may specify such information as the type of control function for which the code is required (e.g., valve control, conveyor control, web tension control, stamping press control, batch processing, etc.), a specific type of product or material to be produced by the automation system for which the control code is being designed, the hardware platform on which the control code will execute (e.g., a specific vendor or model of industrial controller), the types and models of industrial devices and assets that make up the automation system for which the control code is being designed, or other such information.

The natural language request may also reference existing elements or sections of the control code that is currently in development, directing the request toward those elements or sections. For example, the user's request may ask the system to generate control code for controlling the state of a specified controller output, including a description of the conditions that are to determine the output's state (e.g., "I need code that turns the inlet valve on when the oven temperature reaches 650 degrees."). If the user had invoked the in-line chat interface by selecting a specific element of the existing control code (e.g., an output or a rung of ladder logic code), the system can recognize this selected element as the subject of the request without the need for the user to identify the selected element in the request (e.g., "I need code that turns this output on when the oven temperature reaches 650 degrees.").

At 2404, the request received at step 2402 is analyzed by the IDE system using trained custom models and a generative AI model to determine if sufficient information can be inferred from the request to generate the control code. The custom models can be trained using sets of training data representing a range of domain-specific industrial knowledge. Example training data that can be used to train the custom models includes, but is not limited to, libraries of control code instructions or add-on instructions (AOIs) that that encode control or computational functionality and that can be added as elements to control routines, libraries of control code samples or smart objects that encapsulate reusable control code, libraries of user-defined data types (UDTs), libraries of product manuals for various types of industrial devices or software platforms (including programming or instruction manuals for the IDE system's control code development platform, as well as vendor-specific device manuals), help files, vendor knowledgebases, training materials, information defining industrial standards (e.g., global or vertical-specific safety standards, food and drug standards, design standards such as the ISA-88 standard, etc.), technical specifics of various types of industrial control applications (e.g., batch control processes, die casting, valve control, agitator control, etc.), knowledge of specific industrial verticals, knowledge of industrial best practices, control design rules, industrial domain-specific language (DSL) syntax data, and other such training data. As part of the analysis, the system can also generate and submit prompts to the generative AI model, and use the content of the generative AI model's responses in connection with analyzing the user's request, analyzing the control code, and generating natural languages responses directed to the user if necessary.

At 2406, a determination is made as to whether more information is needed from the user in order to generate accurate control code satisfying the user's requirements. If additional information is required (YES at step 2406), the methodology proceeds to step 2408, where the IDE system determines the additional information required, and renders a natural language prompt designed to guide the user toward providing the additional information. In determining the nature of the necessary additional information, the system can reference the industry knowledge encoded in the trained models as well as responses prompted from the generative AI model. At 2410, a response to the prompt generated at step 2408 is received via the in-line chat engine.

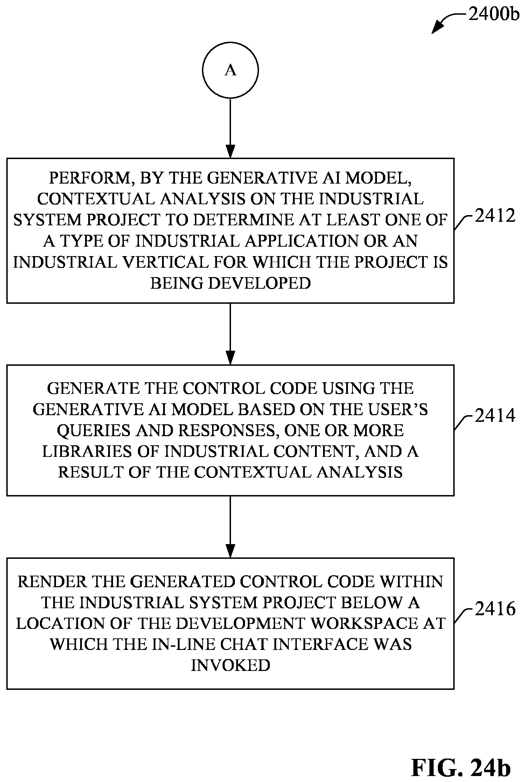

Steps 2406-2410 are repeated as a natural language dialog with the user until sufficient information translatable to a set of functional requirements for the requested code has been obtained. When no further information is required from the user (NO at step 2406), the methodology proceeds to the second part 2400b illustrated in FIG. 24b. At 2412, the IDE system performs contextual analysis of the industrial system project currently being developed to determine at least one of a type of industrial application or an industrial vertical for which the project is being developed. The system can perform this analysis based in part on custom models' industrial knowledge of control coding or industrial standards associated with various types of industrial applications or verticals, and can formulate the response to the user's requested based in part on this encoded industrial expertise and a determination of which standards apply to the system project for which the control code is being generated. At 2414, the industrial IDE system generates the requested control code based on the user's initial query received at step 2402, subsequent responses received at step 2410, results of the contextual analysis performed at step 2412, content of the custom models, and (as needed) responses prompted from the generative AI model.

As part of the translation of the user's natural language request into executable control code, the IDE system can determine the correct mapping between a user's natural language description of any inputs or outputs of interest and the data tags corresponding to those inputs and outputs. For example, the user's natural language request may include a description of a measured condition or state (e.g., "Oven 5 temperature," "conveyor speed," "semi-automatic mode," "light curtain broken," etc.) or a description of a control action directed to a device (e.g., "stop the conveyor," "open the outlet valve," etc.). The IDE system can determine which data tags defined in the control project correspond to these referenced inputs and outputs, and include these data tags in the generated control code as needed to yield code satisfying the user's natural language functional descriptions.

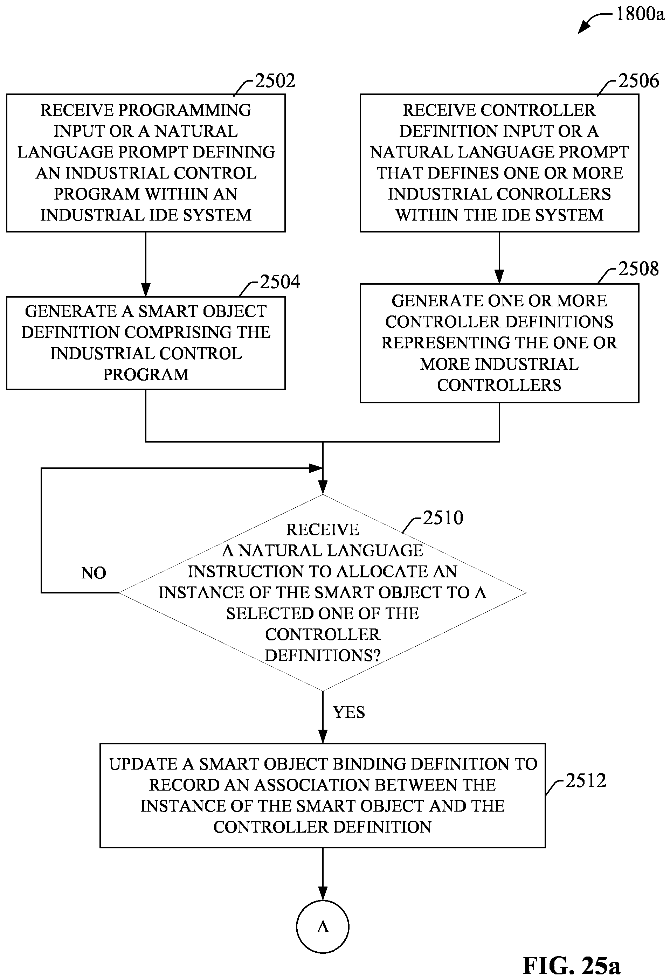

FIG. 25a illustrates a first part of an example methodology 2500a for leveraging generative AI in connection with developing and deploying industrial control applications within a multi-controller project development platform. At 2502, programming input or a natural language prompt defining an industrial control program is received within an industrial IDE system. In the case of explicit programming input, the programming input can comprise, for example, ladder logic programming, function block diagram programming, structured text, control programming formatted as an industrial domain specific language (DSL), or another type of control programming format. The programming input can also define any data tags - e.g., I/O tags, or data tags of any appropriate data type - that will be used within the control program. In addition or alternatively, some or all of the control program can be generated in response to natural language requests submitted via a generative AI copilot window as described in previous examples herein. The programming input or natural language prompt can be received at step 2502 without the control program being initially linked to a specific industrial controller definition. That is, during development, the control program can be agnostic with regard to the specific industrial controller or controller type on which the program will be installed and executed.

At 2504 a smart object definition is generated by the industrial IDE system based on the industrial control program or based on processing of the natural language prompt using trained custom models and prompted responses from a generative AI model (as described in previous examples described herein). The smart object definition can comprise the industrial control program defined at step 2502. Steps 2502 and 2504 can be used to define any number of smart object definitions within a single control project created using the industrial IDE.

As a separate workflow starting at step 2506, controller definition input or a natural language prompt defining one or more industrial controllers can be received within the IDE system. The controller definition input or prompt can specify such controller properties as an industrial controller vendor and model, I/O configuration settings for the controller (e.g., I/O module slot definitions, remote I/O definitions, etc.), networking settings for the controller, a name of the controller, or other such controller properties. At 2508, one or more controller definitions representing the one or more industrial controllers are generated based on the controller definition input received at step 2506. As in the case of smart object definitions, steps 2506 and 2508 can be used to create any number of controller definitions within a single control project created using the industrial IDE system.

If at least one smart object definition and at least one controller definition has been created within the control project using steps 2502-2504 and 2506-2508, a determination is made at step 2510 as to whether an instruction to allocate an instance of the smart object generated at step 2504 to a selected one of the controller definitions generated at step 2508 is received. According to an example workflow, the smart object definition can be represented as a smart object node within a navigation tree rendered by the IDE system's interface. If more than one smart object definition has been created, the navigation tree may render multiple smart object nodes corresponding to the respective smart object definitions in a browsable manner within the navigation tree. The user can select the smart object node corresponding to the smart object definition to be allocated, and can then select the controller definition to which an instance of the smart object is to be allocated. This instruction to allocate the smart object instance to the selected controller definition can be submitted as a natural language request to allocate, assign, or map the smart object to the controller definition (e.g., "Assign the inlet valve control routine to the #1 Mixer controller"). If an instruction to allocate an instance of the smart object is received (YES at step 2510), the methodology proceeds to step 2512, where a smart object binding definition is updated to record an association between the instance of the smart object and the controller definition, in accordance with the allocation instruction.

Any number of instances of the smart object definition generated at step 2504 can be allocated to respective different controller definitions that were generated at step 2508. Each instance of the smart object definition represents a copy of the control program defined by the smart object definition, and allocating the instance to a controller definition indicates that a copy of the control program is to be executed on the physical industrial controller represented by the controller definition. Also, instances of multiple smart object definitions can be allocated to a single controller instance, indicating that the corresponding industrial controller will be executing copies of the control programs defined by each of the smart object definitions.

Also, some embodiments of the IDE system can allow instances of different portions of a single smart object definition to be allocated to respective different controller definitions, thereby allowing the user to define a distribution of the control functionality represented by the smart object definition across multiple industrial controllers.

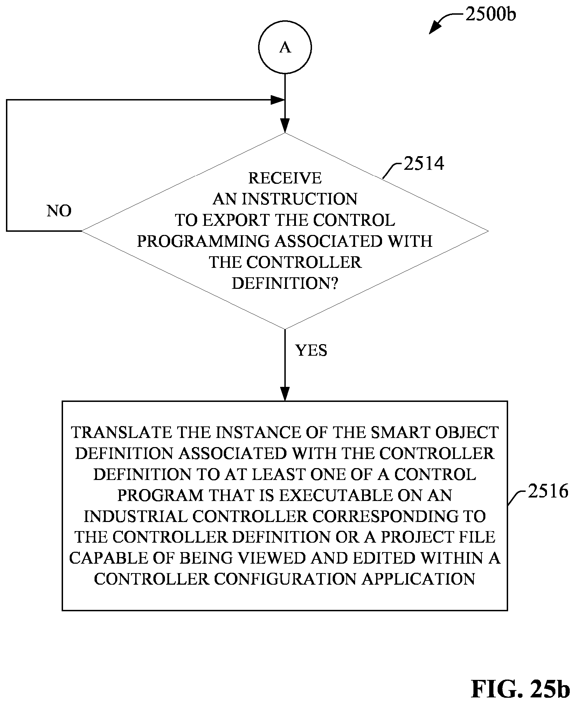

With at least one instance of a smart object definition allocated to a controller definition, the methodology then proceeds to the second part 2500b illustrated in FIG. 25b. At 2514, a determination is made as to whether an instruction is received to export the controller programming associated with the controller definition to which the instance of the smart object definition was allocated at step 2510. If such an export instruction is received (YES at step 2514), the methodology proceeds to step 2516, where the instance of the smart object definition that was allocated to the controller definition is translated either to a control program that is executable on an industrial controller corresponding to the controller definition or to a project file that is capable of being viewed and edited within a controller configuration application (e.g., a separate vendor-specific or equipment specific industrial control development platform). In the latter case, the IDE system can translate the smart object instance to a project file having a file format supported by the target configuration application.

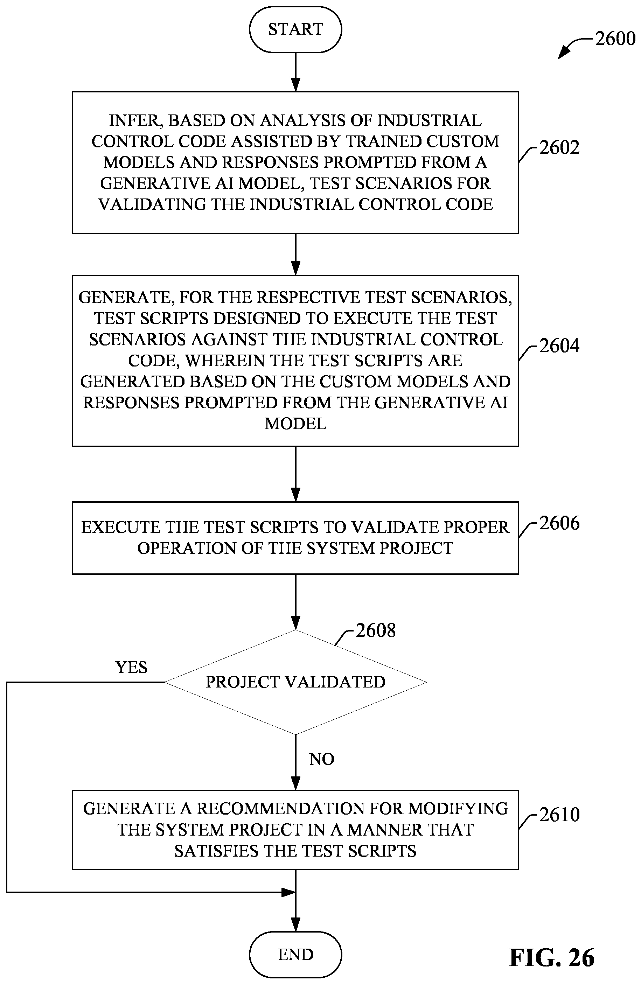

FIG. 26 illustrates an example methodology 2600 for generating test scripts designed to validate proper operation of industrial control code. Initially, at 2602, test scenarios for validating industrial control code (e.g., control code being viewed and edited within the development platform of an industrial IDE system) are inferred based on analysis of the control code, where this analysis is assisted by trained custom models (trained using any of the training data 402 described above) as well as responses prompted from a generative AI model as needed. The test scenarios define tests to be executed against respective portions of the control code as well as expected responses to those tests indicative of valid control performance.

At 2604, the IDE system generates test scripts for executing the test scenarios against the control code. The IDE system can generate these test scripts based on content of the custom models and response prompted from the generative AI model. A given test script can define a testing routine in terms of a sequencing of simulated inputs to be fed to a portion of the control code, and expected responses of the code to the simulated inputs. In some embodiments, the testing routines defined by the test scripts can be based in part on the programmatic context of the target control code portion being tested (e.g., the type of automation application for which the control code is designed, an industrial vertical within which the control code is to be used, an industrial function being carried out by the control code, etc.).

At 2606, the test scripts are executed to validate proper operation of the control code. At 2608, a determination is made as to whether the project is validated based on the response to of the system project to execution of the test scripts. If the project is validated (YES at step 2608), the methodology ends. Alternatively, if the project is not validated (NO at step 2608), the methodology proceeds to step 2610, where a recommendation for modifying the control code in a manner that will satisfy the test script is generated and rendered. This recommendation may comprise, for example, a recommended control code modification or replacement, recommended corrections to data tag addresses, recommended modifications of an industrial device's configuration parameters, or other such corrections. In addition or as an alternative to generating a recommendations, the corrections may be automatically implemented in the control code at step 2610.

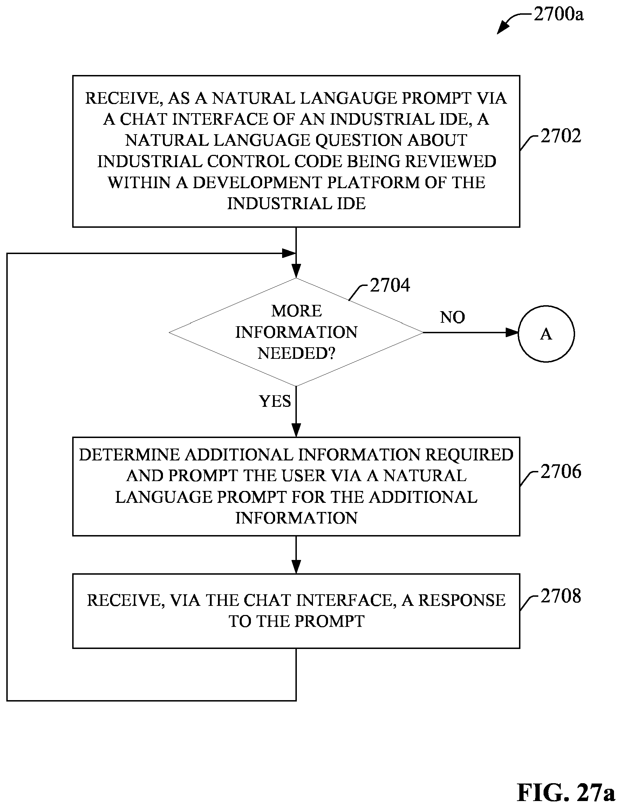

FIG. 27a illustrates a first part of an example methodology 2700a for using a generative AI model to respond to user's natural language prompts submitted against industrial control code. Initially, at 2702 a natural language prompt is received via a generative AI copilot interface of an industrial IDE system, the prompt comprising a question about industrial control code being reviewed within a development platform of the industrial IDE system. For example, the user can submit, as natural language prompts, questions about specified sections of the code. Example questions that can be submitted in this manner include a request for an explanation of specified portions or routines of the control code, requests for an explanation of how a specified device is monitored and controlled by the control code, a request to navigate to a portion or routine of the control code responsible for controlling a specified machine or device, or other such questions about the control code.

At 2704, a determination is made as to whether more information is needed from the user in order to yield a response having a sufficiently high probability of accurately addressing the user's question. If additional information is required (YES at step 2704), the methodology proceeds to step 2706, where the IDE system determines the additional information required, and renders a natural language prompt designed to guide the user toward providing the additional information. In determining the nature of the necessary additional information, the system can reference industry knowledge encoded in trained custom models (e.g., training data 402) as well as responses prompted from a generative AI model. At 2708, a response to the prompt generated at step 2406 is received via the in-line chat engine.

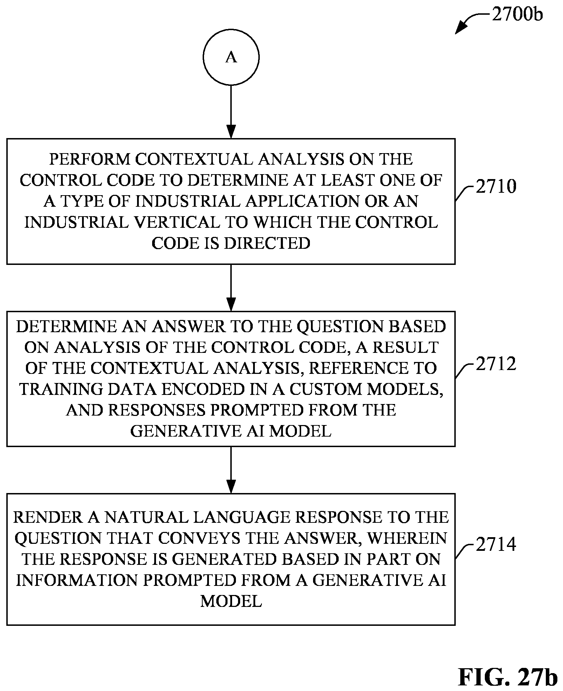

Steps 2704-2708 are repeated as a natural language dialog with the user until sufficient information regarding the user's question been obtained. When no further information is required from the user (NO at step 2704), the methodology proceeds to the second part 2700b illustrated in FIG. 27b. At 2710, contextual analysis of the control code can be performed by the industrial IDE system to determine at least one of a type of industrial application or an industrial vertical to which the control code is directed (similar to step 2412 of methodology 2400b). At 2712, the IDE system determines an answer to the question submitted at step 1702 based on analysis of the control code (e.g., the structure of the code), a result of the contextual analysis performed at step 2710, and reference to industry-specific training data encoded in the custom models. At 2714, a natural language response conveying the answer to the question determined at step 2712 is rendered in the IDE system's user interface. The IDE system generates the response based in part on information prompted from the generative AI model.

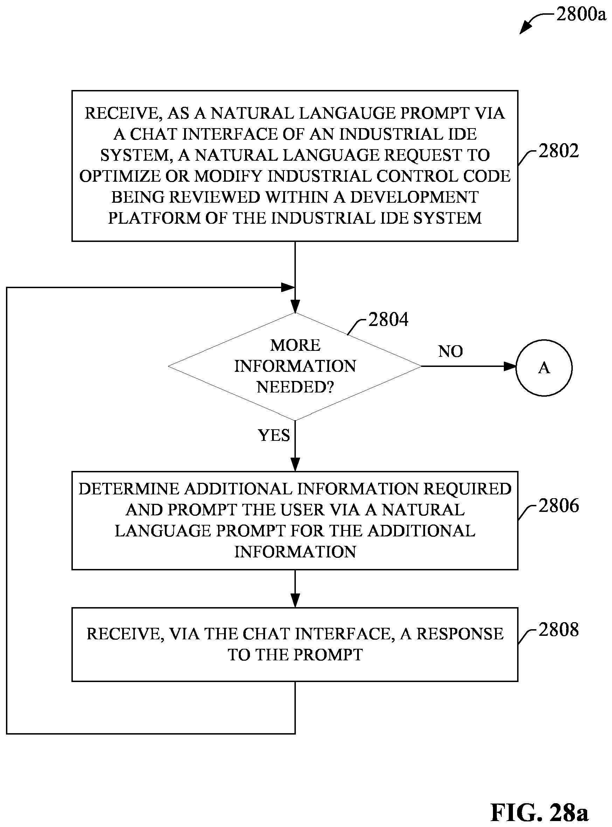

FIG. 28a illustrates a first part of an example methodology 2800a for leveraging generative AI to optimize or otherwise modify control code to improve one or more coding metrics. Initially, at 2802, a natural language request to optimize or modify industrial control code being reviewed within a development platform of an industrial IDE system is received via a chat interface of the IDE system's interface. The request may be, for example, a request to modify the code to comply with a specified industrial coding standard (e.g., an industry-specific standard or an in-house standard), a request to modify the control code to correct a specified performance issue observed on an automation system being monitored and controlled by the control code (e.g., "How can I reduce downtime occurrences of the #2 stamping press?", "How can I reduce energy consumption of the system?", "How can I reduce part cycle time without risking an increase in machine abnormal conditions?" etc.), a more general request to recommend modifications for improving the legibility of the code or for improving an estimated control performance metric of the code, or other such requests.

At 2804, a determination is made as to whether more information is needed from the user in order to recommend a code modification having a sufficiently high level of confidence in satisfying the user's request. If additional information is required (YES at step 2804), the methodology proceeds to step 2806, where the IDE system determines the additional information required, and renders a natural language prompt designed to guide the user toward providing the additional information. In determining the nature of the necessary additional information, the system can reference the industry knowledge encoded in custom models (trained using training data 402) as well as responses prompted from a generative AI model. At 2808, a response to the prompt generated at step 2806 is received via the chat interface.

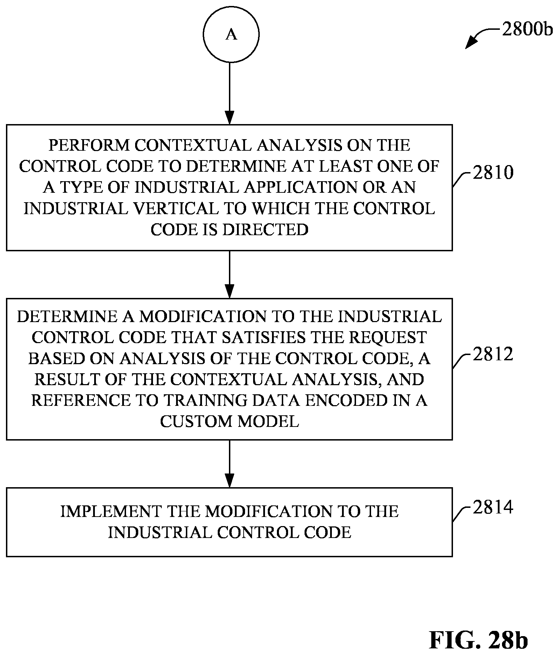

Steps 2804-2808 are repeated as a natural language dialog with the user until sufficient information for ascertaining the nature of the user's request has been obtained. When no further information is required from the user (NO at step 2804), the methodology proceeds to the second part 2800b illustrated in FIG. 28b. At 2810, contextual analysis of the control code can be performed by the industrial IDE system to determine at least one of a type of industrial application or an industrial vertical to which the control code is directed (similar to step 2412 of methodology 2400b). At 2812, the IDE system determines a modification to the industrial control code that satisfies the user's request submitted at step 2802 based on analysis of the control code (e.g., analysis of the code's structure, relationships between the code's variables, etc.), a result of the contextual analysis performed at step 2710, reference to the training data encoded in the custom models, and (as needed) information prompted from the generative AI model. At 2814, the recommended modification is implemented in the control code. In some scenarios, the IDE system may generate a description of the recommended modification, or graphically illustrate the recommended modification, prior to integrating the modification into the code. In such cases, the system will implement the recommended code modification in response to receipt of an interaction from the user indicating acceptance of the proposed modifications.

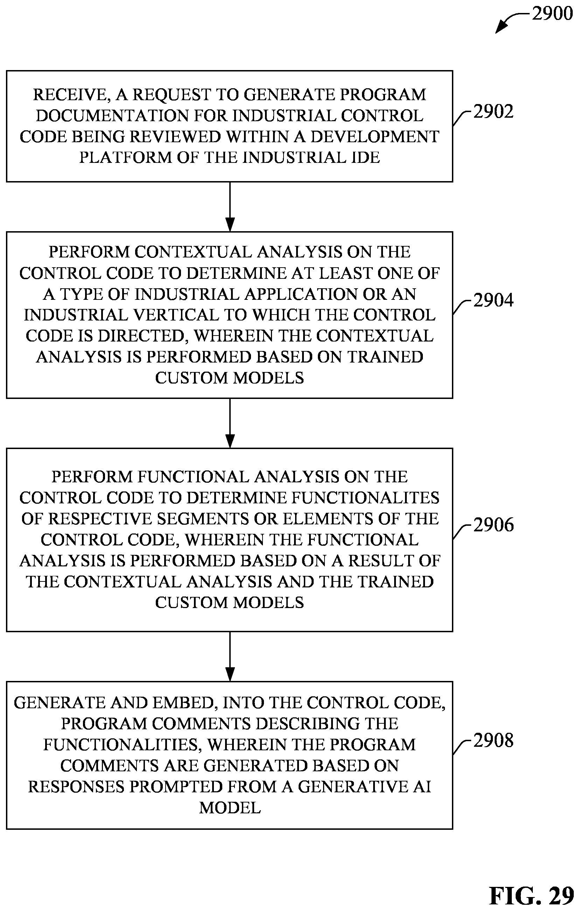

FIG. 29 illustrates an example methodology 2900 for documenting an industrial control program using generative AI. Initially, at 2902, a request is received to generate program documentation for industrial control code being reviewed within a development platform. At 2904, in response to receipt of the request, contextual analysis is performed on the control code to determine at least one of a type of industrial application or an industrial vertical to which the control code is directed. This contextual analysis can be performed based on trained custom models (trained using any of the training data 402 described above). At 2906, functional analysis is performed n the control code to determine functionalities of respective segments or elements of the control code, where this functional analysis is performed based on a result of the contextual analysis performed at step 2904 and the trained custom models. At 2908, program comments describing the functionalities determined at step 2906 are generated and embedded into the control code, where these program comments are generated based on responses prompted from a generative AI model.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

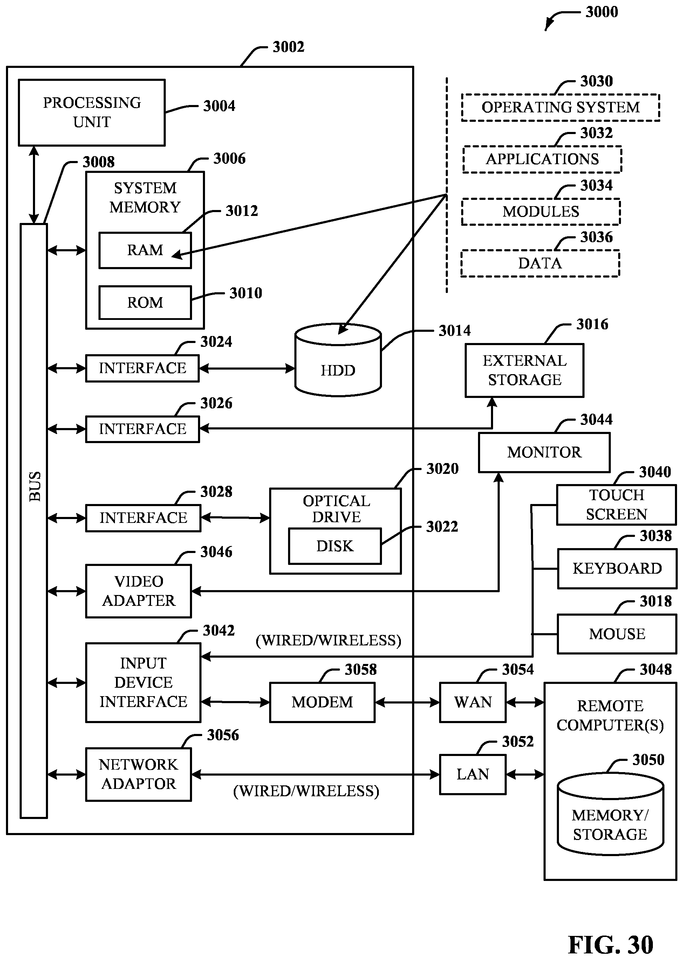

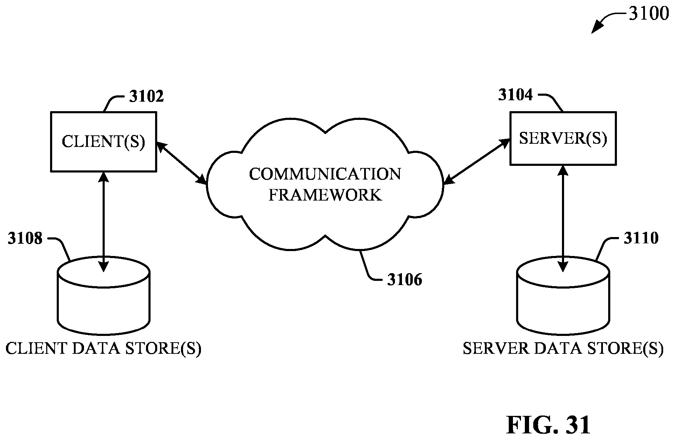

In order to provide a context for the various aspects of the disclosed subject matter, FIGs. 30 and 31 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 30, the example environment 3000 for implementing various embodiments of the aspects described herein includes a computer 3002, the computer 3002 including a processing unit 3004, a system memory 3006 and a system bus 3008. The system bus 3008 couples system components including, but not limited to, the system memory 3006 to the processing unit 3004. The processing unit 3004 can be any of various commercially available processors. Dual microprocessors and other multi-processor architectures can also be employed as the processing unit 3004.

The system bus 3008 can be any of several types of bus structure that can further interconnect to a memory bus (with or without a memory controller), a peripheral bus, and a local bus using any of a variety of commercially available bus architectures. The system memory 3006 includes ROM 3010 and RAM 3012. A basic input/output system (BIOS) can be stored in a non-volatile memory such as ROM, erasable programmable read only memory (EPROM), EEPROM, which BIOS contains the basic routines that help to transfer information between elements within the computer 3002, such as during startup. The RAM 3012 can also include a highspeed RAM such as static RAM for caching data.

The computer 3002 further includes an internal hard disk drive (HDD) 3014 (e.g., EIDE, SATA), one or more external storage devices 3016 (e.g., a magnetic floppy disk drive (FDD) 3016, a memory stick or flash drive reader, a memory card reader, etc.) and an optical disk drive 3020 (e.g., which can read or write from a CD-ROM disc, a DVD, a BD, etc.). While the internal HDD 3014 is illustrated as located within the computer 3002, the internal HDD 3014 can also be configured for external use in a suitable chassis (not shown). Additionally, while not shown in environment 3000, a solid state drive (SSD) could be used in addition to, or in place of, an HDD 3014. The HDD 3014, external storage device(s) 3016 and optical disk drive 3020 can be connected to the system bus 3008 by an HDD interface 3024, an external storage interface 3026 and an optical drive interface 3028, respectively. The interface 3024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 3002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 3012, including an operating system 3030, one or more application programs 3032, other program modules 3034 and program data 3036. All or portions of the operating system, applications, modules, and/or data can also be cached in the RAM 3012. The systems and methods described herein can be implemented utilizing various commercially available operating systems or combinations of operating systems.

Computer 3002 can optionally comprise emulation technologies. For example, a hypervisor (not shown) or other intermediary can emulate a hardware environment for operating system 3030, and the emulated hardware can optionally be different from the hardware illustrated in FIG. 30. In such an embodiment, operating system 3030 can comprise one virtual machine (VM) of multiple VMs hosted at computer 3002. Furthermore, operating system 3030 can provide runtime environments, such as the Java runtime environment or the .NET framework, for application programs 3032. Runtime environments are consistent execution environments that allow application programs 3032 to run on any operating system that includes the runtime environment. Similarly, operating system 3030 can support containers, and application programs 3032 can be in the form of containers, which are lightweight, standalone, executable packages of software that include, e.g., code, runtime, system tools, system libraries and settings for an application.

Further, computer 3002 can be enable with a security module, such as a trusted processing module (TPM). For instance with a TPM, boot components hash next in time boot components, and wait for a match of results to secured values, before loading a next boot component. This process can take place at any layer in the code execution stack of computer 3002, e.g., applied at the application execution level or at the operating system (OS) kernel level, thereby enabling security at any level of code execution.

A user can enter commands and information into the computer 3002 through one or more wired/wireless input devices, e.g., a keyboard 3038, a touch screen 3040, and a pointing device, such as a mouse 3018. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 3004 through an input device interface 3044 that can be coupled to the system bus 3008, but can be connected by other interfaces, such as a parallel port, an IEEE 1394 serial port, a game port, a USB port, an IR interface, a BLUETOOTH^{®} interface, etc.

A monitor 3044 or other type of display device can be also connected to the system bus 3008 via an interface, such as a video adapter 3046. In addition to the monitor 3044, a computer typically includes other peripheral output devices (not shown), such as speakers, printers, etc.

The computer 3002 can operate in a networked environment using logical connections via wired and/or wireless communications to one or more remote computers, such as a remote computer(s) 3048. The remote computer(s) 3048 can be a workstation, a server computer, a router, a personal computer, portable computer, microprocessor-based entertainment appliance, a peer device or other common network node, and typically includes many or all of the elements described relative to the computer 3002, although, for purposes of brevity, only a memory/storage device 3050 is illustrated. The logical connections depicted include wired/wireless connectivity to a local area network (LAN) 3052 and/or larger networks, e.g., a wide area network (WAN) 3054. Such LAN and WAN networking environments are commonplace in offices and companies, and facilitate enterprise-wide computer networks, such as intranets, all of which can connect to a global communications network, e.g., the Internet.

When used in a LAN networking environment, the computer 3002 can be connected to the local network 3052 through a wired and/or wireless communication network interface or adapter 3056. The adapter 3056 can facilitate wired or wireless communication to the LAN 3052, which can also include a wireless access point (AP) disposed thereon for communicating with the adapter 3056 in a wireless mode.

When used in a WAN networking environment, the computer 3002 can include a modem 3058 or can be connected to a communications server on the WAN 3054 via other means for establishing communications over the WAN 3054, such as by way of the Internet. The modem 3058, which can be internal or external and a wired or wireless device, can be connected to the system bus 3008 via the input device interface 3042. In a networked environment, program modules depicted relative to the computer 3002 or portions thereof, can be stored in the remote memory/storage device 3050. It will be appreciated that the network connections shown are example and other means of establishing a communications link between the computers can be used.

When used in either a LAN or WAN networking environment, the computer 3002 can access cloud storage systems or other network-based storage systems in addition to, or in place of, external storage devices 3016 as described above. Generally, a connection between the computer 3002 and a cloud storage system can be established over a LAN 3052 or WAN 3054 e.g., by the adapter 3056 or modem 3058, respectively. Upon connecting the computer 3002 to an associated cloud storage system, the external storage interface 3026 can, with the aid of the adapter 3056 and/or modem 3058, manage storage provided by the cloud storage system as it would other types of external storage. For instance, the external storage interface 3026 can be configured to provide access to cloud storage sources as if those sources were physically connected to the computer 3002.

The computer 3002 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 31 is a schematic block diagram of a sample computing environment 3100 with which the disclosed subject matter can interact. The sample computing environment 3100 includes one or more client(s) 3102. The client(s) 3102 can be hardware and/or software (e.g., threads, processes, computing devices). The sample computing environment 3100 also includes one or more server(s) 3104. The server(s) 3104 can also be hardware and/or software (e.g., threads, processes, computing devices). The servers 3104 can house threads to perform transformations by employing one or more embodiments as described herein, for example. One possible communication between a client 3102 and servers 3104 can be in the form of a data packet adapted to be transmitted between two or more computer processes. The sample computing environment 3100 includes a communication framework 3106 that can be employed to facilitate communications between the client(s) 3102 and the server(s) 3104. The client(s) 3102 are operably connected to one or more client data store(s) 3108 that can be employed to store information local to the client(s) 3102. Similarly, the server(s) 3104 are operably connected to one or more server data store(s) 3110 that can be employed to store information local to the servers 3104.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

### The following is a list of further preferred embodiments of the invention:

Embodiment 1. A system, comprising:
   a memory that stores executable components and one or more custom models; and
   a processor, operatively coupled to the memory, that executes the executable components, the executable components comprising:
      a user interface component configured to receive, via an integrated development environment (IDE) interface, a natural language query directed to industrial control code that, in response to execution on an industrial controller, causes the industrial controller to monitor and control an industrial automation system in accordance with the industrial control code; and
      a generative artificial intelligence (AI) component configured to, in response to receipt of the natural language query, generate a natural language answer to the natural language query based on analysis of the industrial control code, industry knowledge encoded in the one or more custom models, and a response prompted from a generative AI model comprising information used by the generative AI component to formulate the natural language answer,
      wherein the user interface component is configured to render the natural language answer on the IDE interface.
Embodiment 2. The system of embodiment 1, wherein
   the generative AI component is configured to, in response to receipt of the natural language query, formulate a prompt, directed to the generative AI model, designed to obtain the response from the generative AI model comprising the information used by the generative AI component to formulate the natural language answer, and
   the prompt is formulated based on analysis of the natural language query and the industry knowledge encoded in the one or more custom models.
Embodiment 3. The system of embodiment 1, wherein the natural language answer comprises at least one of an explanation of functionality of a portion of the industrial control code specified in the natural language query, an explanation of a variable used in the industrial control code and specified in the natural language query, an explanation of a unit of equipment controlled by the industrial control code and specified in the natural language query, an indication of a portion of the industrial control code responsible for performing a control function specified in the natural language query, or a recommendation for rewriting the industrial control code in a manner predicted to improve a control performance metric specified in the natural language query.
Embodiment 4. The system of embodiment 3, wherein the control performance metric comprises at least one of an energy consumption, a part cycle time, a number of machine downtime occurrences.
Embodiment 5. The system of embodiment 1, wherein the generative AI component is further configured to perform contextual analysis on the industrial control code to determine at least one of a type of industrial application or an industrial vertical for which the industrial control code is being developed, and to generate the natural language answer based on a result of the contextual analysis.
Embodiment 6. The system of embodiment 1, wherein the industry knowledge encoded in the one or more custom models comprises at least one of libraries of control code instructions, libraries of add-on instructions, libraries of control code samples, libraries of user-defined data types (UDTs), libraries of product manuals for industrial devices or software platforms, specification data for industrial devices, training data, information defining industrial standards, design standards for respective different types of industrial control applications, design standards for respective different industrial verticals, knowledge of industrial best practices, control design rules, or industrial domain-specific language (DSL) syntax data.
Embodiment 7. The system of embodiment 1, wherein
   the user interface component is further configured to receive a natural language request for a proposed modification to the industrial control code that will address a control performance issue specified in the natural language request,
   the generative AI component is further configured to, in response to receipt of the natural language request, determine one or more proposed modifications to the industrial control code designed to address the control performance issue based on analysis of the industrial control code, the industry knowledge encoded in the one or more custom models, and another response prompted from the generative AI model comprising information used by the generative AI component to formulate the proposed modifications, and
   the user interface component is configured to render the one or more proposed modifications on the IDE interface as natural language descriptions.
Embodiment 8. The system of embodiment 1, wherein
   the user interface component is configured to:
   in response to receipt of a user interaction at a location on a workspace canvas area of the IDE interface in which the industrial control code is being displayed, render an in-line chat window as an overlay on the workspace canvas area, wherein the location corresponds with an element of the industrial control code, and
   receive the natural language query via interaction with the in-line chat window, and
   the generative AI component is configured to generate the natural language answer to the natural language query based on the analysis using the control code element as a parameter of the natural language query.
Embodiment 9. The system of embodiment 1, wherein
   the analysis is a first analysis,
   the generative AI component is further configured to identify, based on a second analysis of the industrial control code, a potential modification to the industrial control code predicted to at least one of reduce a size of the industrial control code without altering control functionality of the industrial control code, reduce a number or distance of movements of a machine controlled using the industrial control code, eliminate an inconsistency in a naming convention for variables used in the industrial control code, or modularize portions of the industrial control code,
   the user interface is configured to render, via the IDE interface, a natural language recommendation to implement the potential modification, and
   the second analysis is performed on the industrial control code based on the industry knowledge encoded in the one or more custom models and another response prompted from the generative AI model comprising information used by the generative AI component to identify the potential modification.
Embodiment 10. The system of embodiment 1, wherein
   the user interface component is further configured to receive a natural language request to modify the industrial control code in a manner that brings the industrial control code into compliance with a specified programming standard, and
   the generative AI component is further configured to, in response to receipt of the natural language request, implement one or more modifications to the industrial control code that bring the industrial control code into compliance with the specified programming standard,
   wherein the generative AI component is configured to determine the one or more modifications based on information about the specified programming standard defined in the one or more custom models and another response prompted from the generative AI model.
Embodiment 11. A method, comprising:
   receiving, by a system comprising a processor via an integrated development environment (IDE) interface, a natural language query directed to industrial control code that, in response to execution on an industrial controller, causes the industrial controller to monitor and control an industrial automation system in accordance with the industrial control code;
   in response to receipt of the natural language query, generating, by the system, a natural language answer to the natural language query based on analysis of the industrial control code, industry knowledge encoded in the one or more custom models, and a response prompted from a generative AI model, wherein the response comprises information used by the system to formulate the natural language answer; and
   rendering, by the system, the natural language answer on the IDE interface.
Embodiment 12. The method of embodiment 11, further comprising:
   in response to the receiving of the natural language query, generating, by the system, a prompt directed to the generative AI model and designed to obtain the response from the generative AI model comprising the information used to formulate the natural language answer,
   wherein the generating of the prompt comprises generating the prompt based on analysis of the natural language query and the industry knowledge encoded in the one or more custom models.
Embodiment 13. The method of embodiment 11, wherein the generating of the natural language answer comprises generating at least one of an explanation of functionality of a portion of the industrial control code specified in the natural language query, an explanation of a variable used in the industrial control code and specified in the natural language query, an explanation of a unit of equipment controlled by the industrial control code and specified in the natural language query, an indication of a portion of the industrial control code responsible for performing a control function specified in the natural language query, or a recommendation for rewriting the industrial control code in a manner predicted to improve a control performance metric specified in the natural language query.
Embodiment 14. The method of embodiment 11, further comprising performing, by the system, contextual analysis on the industrial control code to determine at least one of a type of industrial application or an industrial vertical for which the industrial control code is being developed,
   wherein the generating of the natural language answer comprises generating the natural language answer based on a result of the contextual analysis.
Embodiment 15. The method of embodiment 11, wherein the industry knowledge encoded in the one or more custom models comprises at least one of libraries of control code instructions, libraries of add-on instructions, libraries of control code samples, libraries of user-defined data types (UDTs), libraries of product manuals for industrial devices or software platforms, specification data for industrial devices, training data, information defining industrial standards, design standards for respective different types of industrial control applications, design standards for respective different industrial verticals, knowledge of industrial best practices, control design rules, or industrial domain-specific language (DSL) syntax data.
Embodiment 16. The method of embodiment 11, further comprising:
   receiving, by the system, a natural language request for a proposed modification to the industrial control code that will address a control performance issue specified in the natural language request;
   in response to the receiving of the natural language request, determining, by the system, one or more proposed modifications to the industrial control code designed to address the control performance issue based on analysis of the industrial control code, the industry knowledge encoded in the one or more custom models, and another response prompted from the generative AI model comprising information used by the system to formulate the proposed modifications;
      and
   rendering, by the system, the one or more proposed modifications on the IDE interface as natural language descriptions.
Embodiment 17. The method of embodiment 11, further comprising:
   in response to receiving of a user interaction at a location on a workspace canvas area of the IDE interface in which the industrial control code is being displayed, rendering, by the system,
   an in-line chat window as an overlay on the workspace canvas area, wherein the location corresponds with an element of the industrial control code, and
   wherein the receiving of the natural language query comprises receiving the natural language query via interaction with the in-line chat window, and
   the generating of the natural language answer comprises generating the natural language answer to the natural language query based on the analysis using the control code element as a parameter of the natural language query.
Embodiment 18. The method of embodiment 11, wherein
   the analysis is a first analysis, and
   the method further comprises:
      identifying, by the system based on a second analysis of the industrial control code, a potential modification to the industrial control code predicted to at least one of reduce a size of the industrial control code without altering control functionality of the industrial control code, reduce a number or distance of movements of a machine controlled using the industrial control code, eliminate an inconsistency in a naming convention for variables used in the industrial control code, or modularize portions of the industrial control code; and
      rendering, by the system via the IDE interface, a natural language recommendation to implement the potential modification,
      wherein the second analysis is performed on the industrial control code based on the industry knowledge encoded in the one or more custom models and another response prompted from the generative AI model comprising information used by the system to identify the potential modification.
Embodiment 19. A non-transitory computer-readable medium having stored thereon instructions that, in response to execution, cause an industrial integrated development environment (IDE) system comprising a processor to perform operations, the operations comprising:
   receiving, via an integrated development environment (IDE) interface, a natural language query directed to industrial control code that, in response to execution on an industrial controller, causes the industrial controller to monitor and control an industrial automation system in accordance with the industrial control code;
   in response to receipt of the natural language query, generating a natural language answer to the natural language query based on analysis of the industrial control code, industry knowledge encoded in the one or more custom models, and a response prompted from a generative AI model, wherein the response comprises information used by the system to formulate the natural language answer; and
   rendering the natural language answer on the IDE interface.
Embodiment 20. The non-transitory computer-readable medium of embodiment 19, further comprising:
   in response to the receiving of the natural language query, generating a prompt directed to the generative AI model and designed to obtain the response from the generative AI model comprising the information used to formulate the natural language answer,
   wherein the generating of the prompt comprises generating the prompt based on analysis of the natural language query and the industry knowledge encoded in the one or more custom models.

## Claims

1. A system, comprising:
a memory that stores executable components and one or more custom models; and
a processor, operatively coupled to the memory, that executes the executable components, the executable components comprising:
a user interface component configured to receive, via an integrated development environment (IDE) interface, a natural language query directed to industrial control code that, in response to execution on an industrial controller, causes the industrial controller to monitor and control an industrial automation system in accordance with the industrial control code; and
a generative artificial intelligence (AI) component configured to, in response to receipt of the natural language query, generate a natural language answer to the natural language query based on analysis of the industrial control code, industry knowledge encoded in the one or more custom models, and a response prompted from a generative AI model comprising information used by the generative AI component to formulate the natural language answer,
wherein the user interface component is configured to render the natural language answer on the IDE interface.

2. The system of claim 1, wherein
the generative AI component is configured to, in response to receipt of the natural language query, formulate a prompt, directed to the generative AI model, designed to obtain the response from the generative AI model comprising the information used by the generative AI component to formulate the natural language answer, and
the prompt is formulated based on analysis of the natural language query and the industry knowledge encoded in the one or more custom models.

3. The system of one of claims 1 or 2, wherein the natural language answer comprises at least one of an explanation of functionality of a portion of the industrial control code specified in the natural language query, an explanation of a variable used in the industrial control code and specified in the natural language query, an explanation of a unit of equipment controlled by the industrial control code and specified in the natural language query, an indication of a portion of the industrial control code responsible for performing a control function specified in the natural language query, or a recommendation for rewriting the industrial control code in a manner predicted to improve a control performance metric specified in the natural language query, and/or
wherein the control performance metric comprises at least one of an energy consumption, a part cycle time, a number of machine downtime occurrences.

4. The system of one of claims 1 to 3, wherein the generative AI component is further configured to perform contextual analysis on the industrial control code to determine at least one of a type of industrial application or an industrial vertical for which the industrial control code is being developed, and to generate the natural language answer based on a result of the contextual analysis.

5. The system of one of claims 1 to 4, wherein the industry knowledge encoded in the one or more custom models comprises at least one of libraries of control code instructions, libraries of add-on instructions, libraries of control code samples, libraries of user-defined data types (UDTs), libraries of product manuals for industrial devices or software platforms, specification data for industrial devices, training data, information defining industrial standards, design standards for respective different types of industrial control applications, design standards for respective different industrial verticals, knowledge of industrial best practices, control design rules, or industrial domain-specific language (DSL) syntax data.

6. The system of one of claims 1 to 5, wherein
the user interface component is further configured to receive a natural language request for a proposed modification to the industrial control code that will address a control performance issue specified in the natural language request,
the generative AI component is further configured to, in response to receipt of the natural language request, determine one or more proposed modifications to the industrial control code designed to address the control performance issue based on analysis of the industrial control code, the industry knowledge encoded in the one or more custom models, and another response prompted from the generative AI model comprising information used by the generative AI component to formulate the proposed modifications, and
the user interface component is configured to render the one or more proposed modifications on the IDE interface as natural language descriptions.

7. The system of one of claims 1 to 6, wherein
the user interface component is configured to:
in response to receipt of a user interaction at a location on a workspace canvas area of the IDE interface in which the industrial control code is being displayed, render an in-line chat window as an overlay on the workspace canvas area, wherein the location corresponds with an element of the industrial control code, and
receive the natural language query via interaction with the in-line chat window, and
the generative AI component is configured to generate the natural language answer to the natural language query based on the analysis using the control code element as a parameter of the natural language query.

8. The system of one of claims 1 to 7, wherein
the analysis is a first analysis,
the generative AI component is further configured to identify, based on a second analysis of the industrial control code, a potential modification to the industrial control code predicted to at least one of reduce a size of the industrial control code without altering control functionality of the industrial control code, reduce a number or distance of movements of a machine controlled using the industrial control code, eliminate an inconsistency in a naming convention for variables used in the industrial control code, or modularize portions of the industrial control code,
the user interface is configured to render, via the IDE interface, a natural language recommendation to implement the potential modification, and
the second analysis is performed on the industrial control code based on the industry knowledge encoded in the one or more custom models and another response prompted from the generative AI model comprising information used by the generative AI component to identify the potential modification.

9. The system of one of claims 1 to 8, wherein
the user interface component is further configured to receive a natural language request to modify the industrial control code in a manner that brings the industrial control code into compliance with a specified programming standard, and
the generative AI component is further configured to, in response to receipt of the natural language request, implement one or more modifications to the industrial control code that bring the industrial control code into compliance with the specified programming standard,
wherein the generative AI component is configured to determine the one or more modifications based on information about the specified programming standard defined in the one or more custom models and another response prompted from the generative AI model.

10. A method, comprising:
receiving, by a system comprising a processor via an integrated development environment (IDE) interface, a natural language query directed to industrial control code that, in response to execution on an industrial controller, causes the industrial controller to monitor and control an industrial automation system in accordance with the industrial control code;
in response to receipt of the natural language query, generating, by the system, a natural language answer to the natural language query based on analysis of the industrial control code, industry knowledge encoded in the one or more custom models, and a response prompted from a generative AI model, wherein the response comprises information used by the system to formulate the natural language answer; and
rendering, by the system, the natural language answer on the IDE interface.

11. The method of claim 10, further comprising:
in response to the receiving of the natural language query, generating, by the system, a prompt directed to the generative AI model and designed to obtain the response from the generative AI model comprising the information used to formulate the natural language answer,
wherein the generating of the prompt comprises generating the prompt based on analysis of the natural language query and the industry knowledge encoded in the one or more custom models.

12. The method of claim 10 or 11, wherein the generating of the natural language answer comprises generating at least one of an explanation of functionality of a portion of the industrial control code specified in the natural language query, an explanation of a variable used in the industrial control code and specified in the natural language query, an explanation of a unit of equipment controlled by the industrial control code and specified in the natural language query, an indication of a portion of the industrial control code responsible for performing a control function specified in the natural language query, or a recommendation for rewriting the industrial control code in a manner predicted to improve a control performance metric specified in the natural language query.

13. The method of one of claims 8 to 12, further comprising performing, by the system, contextual analysis on the industrial control code to determine at least one of a type of industrial application or an industrial vertical for which the industrial control code is being developed,
wherein the generating of the natural language answer comprises generating the natural language answer based on a result of the contextual analysis, or
wherein the industry knowledge encoded in the one or more custom models comprises at least one of libraries of control code instructions, libraries of add-on instructions, libraries of control code samples, libraries of user-defined data types (UDTs), libraries of product manuals for industrial devices or software platforms, specification data for industrial devices, training data, information defining industrial standards, design standards for respective different types of industrial control applications, design standards for respective different industrial verticals, knowledge of industrial best practices, control design rules, or industrial domain-specific language (DSL) syntax data, or
further comprising:
receiving, by the system, a natural language request for a proposed modification to the industrial control code that will address a control performance issue specified in the natural language request;
in response to the receiving of the natural language request, determining, by the system, one or more proposed modifications to the industrial control code designed to address the control performance issue based on analysis of the industrial control code, the industry knowledge encoded in the one or more custom models, and another response prompted from the generative AI model comprising information used by the system to formulate the proposed modifications; and
rendering, by the system, the one or more proposed modifications on the IDE interface as natural language descriptions, and/or
further comprising:
in response to receiving of a user interaction at a location on a workspace canvas area of the IDE interface in which the industrial control code is being displayed, rendering, by the system, an in-line chat window as an overlay on the workspace canvas area, wherein the location corresponds with an element of the industrial control code, and
wherein the receiving of the natural language query comprises receiving the natural language query via interaction with the in-line chat window, and
the generating of the natural language answer comprises generating the natural language answer to the natural language query based on the analysis using the control code element as a parameter of the natural language query, or
wherein
the analysis is a first analysis, and
the method further comprises:
identifying, by the system based on a second analysis of the industrial control code, a potential modification to the industrial control code predicted to at least one of reduce a size of the industrial control code without altering control functionality of the industrial control code, reduce a number or distance of movements of a machine controlled using the industrial control code, eliminate an inconsistency in a naming convention for variables used in the industrial control code, or modularize portions of the industrial control code; and
rendering, by the system via the IDE interface, a natural language recommendation to implement the potential modification,
wherein the second analysis is performed on the industrial control code based on the industry knowledge encoded in the one or more custom models and another response prompted from the generative AI model comprising information used by the system to identify the potential modification.

14. A non-transitory computer-readable medium having stored thereon instructions that, in response to execution, cause an industrial integrated development environment (IDE) system comprising a processor to perform operations, the operations comprising:
receiving, via an integrated development environment (IDE) interface, a natural language query directed to industrial control code that, in response to execution on an industrial controller, causes the industrial controller to monitor and control an industrial automation system in accordance with the industrial control code;
in response to receipt of the natural language query, generating a natural language answer to the natural language query based on analysis of the industrial control code, industry knowledge encoded in the one or more custom models, and a response prompted from a generative AI model, wherein the response comprises information used by the system to formulate the natural language answer; and
rendering the natural language answer on the IDE interface.

15. The non-transitory computer-readable medium of claim 14, further comprising:
in response to the receiving of the natural language query, generating a prompt directed to the generative AI model and designed to obtain the response from the generative AI model comprising the information used to formulate the natural language answer,
wherein the generating of the prompt comprises generating the prompt based on analysis of the natural language query and the industry knowledge encoded in the one or more custom models.
